# FASCICULE DE BREVET EUROPEEN

(11) **EP 2 533 647 B1**
(45) Date de publication et mention de la délivrance du brevet: **07.10.2015**
(21) Numéro de dépôt: 11708531.6
(22) Date de dépôt: 09.02.2011
(51) Int. Cl.: A21C 1/04, A21C 1/02, A21C 1/14, B01F 9/12, B01F 9/22

(54) **Dispositif de préparation culinaire avec mélange des ingrédients contenus dans celui-ci et mesure intégrée de la température du mélange, et procédé de régulation dudit dispositif**
Vorrichtung für Speisenzubereitung mit einer Mischung aus Zutaten in dieser Vorrichtung sowie integrierte Temperaturmessung der Mischung, und Verfahren zur Regelung der Vorrichtung
Device for culinary preparation using a mixture of ingredients contained in said device, and integrated measurement of the temperature of the mixture, and method for regulation said device

(30) Priorité: 10.02.2010 FR 1000539
(43) Date de publication de la demande: 19.12.2012
(73) Titulaire: Loiselet, Michel, 12490 Montjaux (FR)
(72) Inventeur: Loiselet, Michel, 12490 Montjaux (FR)
(86) Numéro de dépôt international: PCT/FR2011/000078
(87) Numéro de publication internationale: WO 2011/098687

(56) Documents cités:
- EP-A2- 0 221 759
- DE-U- 1 920 402
- FR-A1- 2 529 668
- FR-A1- 2 600 555

## Description

La présente invention concerne, d'une façon générale, un dispositif de préparation culinaire avec mélange des ingrédients contenus dans celui-ci et pour lequel une mesure intégrée de la température du mélange est effectuée.

Plus particulièrement, la présente invention concerne un dispositif de préparation culinaire pour lequel la température des ingrédients au sein du récipient de travail du dispositif est mesurée avec précision, pour, en coopération avec des outils mécaniques du dispositif élaborés spécifiquement, optimiser le processus de préparation culinaire ayant lieu dans ce dispositif.

Ce dispositif peut servir à la préparation de pâtes à base de farine et dans ce qui suit, il va être pris comme exemple l'élaboration de pâtons destinés à la fabrication du pain. Il est à garder à l'esprit que cet exemple n'est pas limitatif.

Dans le secteur du pétrissage qui peut concerner non seulement des artisans boulangers mais aussi, entre autres, des semi industries, particulièrement des industries agro-alimentaires, des petites et grandes surfaces, des laboratoires notamment pour la meunerie, il est connu d'effectuer l'opération de pétrissage en plaçant la pâte dans une cuve à l'aide d'au moins un outil de travail effectuant une action de malaxage de la pâte.

Il peut exister principalement deux types de pétrin, l'un dit à cuve tournante dans laquelle la cuve est entraînée en rotation par rapport à l'outil de travail qui est fixe et l'autre dit à outil tournant dans lequel l'outil tourne par rapport à la cuve qui est fixe ou qui peut être aussi tournante de manière différente que l'outil de travail. A l'intérieur de ces groupes, les pétrins se différencient de par l'entraînement de la cuve ou de l'outil de travail et/ou la présence d'un contre-outil tournant ou non et/ou d'outils auxiliaires.

De nombreux dispositifs de principe différent sont ainsi connus pour le travail de la pâte, à savoir par exemple des machines à pain pétrisseuses, des robots pétrisseurs et des marmites minutes pétrisseuses pouvant devenir selon les tailles des pétrins-fermenteurs-réacteurs ou des robots-batteurs-mélangeurs-pétrisseurs-fermenteurs-réacteurs. Pour une meilleure compréhension de ces divers dispositifs, il est ici fait référence aux documents FR 2 710 551, FR 2 805 177 et FR 2 529 668 , décrivant un dispositif selon le préambule de la revendication 1.

Pendant le travail de la pâte, a lieu une fermentation lente de la pâte qui doit être surveillée pour obtenir une bonne qualité de produit fini. Il est ainsi connu de réguler les températures et l'hygrométrie régnant dans la cuve recevant la pâte. Il est courant aussi d'utiliser dans le domaine du pétrissage des dispositifs de climatisation à faible brassage d'air associés à des systèmes de réchauffement et d'humidification régulés et contrôlés pour optimiser la fermentation de la pâte.

Le document WO 00/51438 décrit une cuve à double enveloppe isolée du pétrin réacteur fermenteur avec un système de refroidissement qui se déclenche par cycles selon les écarts de température des levains pâteux et qui déclenche également la rotation lente du bras tournant comme un cycle de réfrigérateur. Ce dispositif forme un ensemble spécifique relativement onéreux et la prise de mesure de la température des levains pâteux n'est pas optimale.

Le document FR 2 954 181 décrit un appareil de préparation culinaire avec une cuve dans laquelle est introduit les ingrédients, un premier outil de travail avec une partie active venant en contact avec les ingrédients à malaxer dans la cuve et un second outil de travail coopérant avec ledit premier outil afin d'optimiser le malaxage des ingrédients dans la cuve. Ce document ne décrit cependant pas un quelconque moyen de mesure de la température des ingrédients présents dans la cuve.

Le document FR 2 790 484 décrit pour un pétrin un dispositif de mesures et de suivi des températures de la pâte, de régulation de la vitesse de l'outil de travail et de son arrêt ainsi que de la régulation du chaud et du froid pour ce pétrin. Le dispositif de mesures comprend au moins un capteur placé dans la cuve, notamment en partie basse d'un outil présent dans cette cuve. Ce document divulgue ainsi, en fonction de mesures de température, le contrôle du processus de fabrication en agissant sur la régulation de l'outil de travail.

Cependant, pour optimiser la fabrication de la pâte et notamment sa fermentation, il est nécessaire de prévoir un bon malaxage de celle-ci, afin par exemple d'obtenir une température uniforme dans la pâte. Ceci n'est pas toujours atteint par les outils de travail, le plus souvent sous forme de bras, en fonction dans ces pétrins existants et ce document n'enseigne rien à ce sujet.

Il existe donc un besoin d'optimisation de la forme de l'outil de travail dans un dispositif culinaire selon un des divers types actuellement disponibles, afin que la régulation de température du dispositif, basée sur des mesures de température effectuées par un capteur, soit réellement efficace.

La présente invention a pour premier objet d'optimiser le travail d'un dispositif culinaire, d'une part, en mesurant précisément la température des ingrédients contenus dans ce dispositif et, d'autre part, en assurant une meilleure efficacité des outils de travail effectuant l'action de brassage des ingrédients dans le dispositif, notamment en permettant une uniformisation de la température des ingrédients contenus dans le dispositif, ceci par une optimisation de la forme desdits outils.

A cet effet, l'invention a pour objet un dispositif de préparation culinaire, selon la revendication 1.

Selon des caractéristiques additionnelles de la présente invention :
- le contre-outil comporte une partie inférieure possédant une forme épousant la forme de la trajectoire balayée par la partie inférieure du premier outil de travail et se terminant avantageusement par une pointe pouvant s'écarter de ladite trajectoire du premier outil de travail,
- ledit contre-outil est sous la forme d'un bras présentant une section sensiblement plane avec un profil intérieur plat ou légèrement incurvé et un profil extérieur légèrement bombé aérodynamique,
- le premier outil de travail est entraîné par un élément dans un mouvement de rotation composé de type planétaire cycloïde ou elliptique, ledit outil de travail tournant, d'une part, sur lui-même autour de son axe de rotation et, d'autre part, en même temps que l'élément lui-même autour de l'axe de rotation dudit élément, l'axe de rotation de l'élément n'étant pas confondu avec l'axe de rotation du premier outil de travail, l'outil de travail pénétrant dans la cuve par son ouverture ou une de ses parois,

- le contre-outil de travail est aussi entraîné dans un mouvement de rotation composé de type planétaire cycloïde ou elliptique, de préférence à mouvements corotatifs ou contra-rotatifs dans un rapport de vitesse préférentielle de 1/10 par rapport à l'outil de travail interchangeable animé d'une vitesse variable.
- la sonde thermométrique est disposée sur la paroi interne du fond de la cuve, cette sonde pouvant être sans fil et télé-alimentée par induction d'une bobine quand la cuve est entraînée en rotation ou avec fil,
- le second contre-outil porte la sonde thermométrique sur sa partie active, cette sonde pouvant être sans fil et télé-alimentée par induction d'une bobine quand le second contre-outil est entraîné en rotation ou avec fil,
- les parois latérales et le fond de la cuve sont entourés d'une enceinte thermique ou comprennent des éléments chauffants, l'ouverture de la cuve se situe dans la partie supérieure de celle-ci et est revêtue d'un couvercle comprenant un matériau isolant ou comprenant des éléments chauffants,
- les éléments chauffants sont des couches de résistances sérigraphiées directement sur le couvercle ou la cuve, une interruption du chauffage par ces éléments étant déclenchée quand le couvercle est soulevé de la cuve,
- le couvercle peut être retourné, les faces opposées dudit couvercle qui sont alternativement mises en regard de l'ouverture de la cuve présentant des propriétés d'isolation thermique différentes et/ou des éléments auxiliaires spécifiques, du type buse à buée ou buse à eau, la mise en opération de ces éléments par retournement du couvercle étant adaptée aux conditions opératives du dispositif régnant alors,
- le couvercle de sécurité comporte sur une de ses faces de recouvrement de l'ouverture de la cuve une attache pour un outil pré-diviseur effectuant la division de la masse des ingrédients en cuve en pré-masses, avantageusement pré-pesées volumétriquement par un système de pesage,
- la cuve présente des parois inclinées par rapport à la verticale de l'ordre de 2 à 9° et est évasée en partie supérieure pour une meilleure visualisation de son contenu et/ou un meilleur accès à ladite cuve, les parois de ladite cuve pouvant être revêtues, intérieurement, d'un revêtement quasi-cristaux poli-miroir et, extérieurement, d'un revêtement quasi-cristaux sombre, lesdites parois pouvant présenter une simple ou double peau, avec un composant tel que l'argile zéolite ou l'eau pouvant être intercalé entre les deux peaux, ladite cuve étant moulée ou emboutie en une matière ou un mélange de matières telle qu'acier inoxydable, polypropylène, verre borosilicate, aluminium etc...., la lame racleuse de l'outil racloir est, de préférence, en silicone souple de qualité alimentaire moulée sur un insert,
- le premier outil de travail et, le cas échéant, le ou les autres outils, est ou sont dotés d'un insert, par exemple, en fonderie d'aluminium, en fonte ou en inox recouvert d'un moulage, par exemple, en polyuréthane 90/95 Schorres de qualité alimentaire ou dans d'autres matériaux équivalents anti-abrasion tels que silicone etc...,
- l'entraînement du premier outil de travail se trouve au-dessus de la cuve avec un axe d'entraînement confondu avec l'axe médian de la cuve ou incliné par rapport audit axe de la cuve ou l'entraînement du premier outil de travail présente un axe s'étendant sensiblement perpendiculairement à l'axe médian de la cuve, ledit outil de travail traversant une paroi latérale de ladite cuve,
- l'entraînement du premier outil de travail comporte un unique moteur compact avec une large plage de vitesses associé à un réducteur ou deux moteurs équipés de poulies menantes reliées à une seule et même poulie menée avec un réducteur compact,
- le dispositif comprenant un contre-outil, l'entraînement dudit contre-outil et du premier outil de travail sont effectués du même côté de la cuve,
- chaque outil est associé à un plateau, le plateau du contre-outil s'encastrant sous le plateau du premier outil de travail, les deux plateaux étant retenus ensemble par des moyens d'attache facilement amovibles du type plots ou clips,
- le contre-outil s'étend horizontalement dans la cuve, ou avec une faible inclinaison par rapport à l'horizontal, en pénétrant dans ladite cuve par une des parois latérales, ou, la cuve présentant une ouverture supérieure, le contre-outil s'étend verticalement, ou avec une faible inclinaison par rapport à la verticale, dans la cuve en pénétrant dans celle-ci par son ouverture supérieure, ledit contre-outil étant, dans les deux cas, coulissant dans la cuve et retirable de celle-ci,
- le contre-outil s'étend dans la cuve et est reçu sur une majeure portion de sa longueur dans le premier outil de travail sous forme d'un bras dans un logement pratiqué dans ledit bras, quand ledit bras et le contre-outil sont en regard dans la cuve.

L'invention concerne enfin un procédé selon la revendication 15 de régulation d'un tel dispositif culinaire, ce dispositif présentant une unité de commande centrale des paramètres de fonctionnement du dispositif, caractérisé en ce qu'au moins un paramètre de fonctionnement du dispositif est régulé en fonction de la température mesurée par la sonde thermométrique.

Les premiers résultats constatés par le demandeur montrent qu'il y a une synergie inattendue entre contrôle précis de la température à l'intérieur de la cuve et optimisation de la forme des outils de travail entraînant une meilleure action de brassage effectuée par ces outils. L'effet technique obtenu est une amélioration conséquente de la qualité du produit final obtenu ainsi que de la durée de sa fabrication, effet qui n'était pas prévisible a priori.

L'invention va maintenant être décrite plus en détail mais de façon non limitative en regard des figures annexées, dans lesquelles :
- la figure 1 est une représentation schématique d'une coupe latérale d'un pétrin de type oblique présentant une sonde thermométrique dans son contre-outil, ledit pétrin illustrant le dispositif de préparation culinaire conformément à la présente invention,
- la figure 2 est une représentation schématique d'une coupe d'un pétrin de type spirale, dans un plan perpendiculaire à sa hauteur, présentant une sonde thermométrique dans son contre-outil et un racloir, ledit pétrin illustrant le dispositif de préparation culinaire conformément à la présente invention,
- la figure 3 est une représentation schématique d'une coupe d'un pétrin de type spirale, planétaire ou à mouvements relatifs contra-rotatifs dans un plan perpendiculaire à sa hauteur, présentant une sonde thermométrique dans son contre-outil, ledit pétrin illustrant le dispositif de préparation culinaire conformément à la présente invention,
- la figure 4 est une représentation schématique du pétrin de la figure 3, à mouvements relatifs corotatifs, dans une autre disposition des éléments présents dans la cuve,
- la figure 5 est une représentation schématique d'une coupe verticale d'un pétrin batteur mélangeur de type planétaire à cuve non tournante, présentant une sonde thermométrique dans son socle, ledit pétrin illustrant le dispositif de préparation culinaire conformément à la présente invention,
- la figure 6 est une représentation schématique d'une coupe verticale d'un pétrin cuiseur de type machine à pain ou marmite minute, présentant une sonde thermométrique dans son contre-bras pénétrant à l'intérieur du bras de pétrissage, ledit pétrin illustrant le dispositif de préparation culinaire conformément à la présente invention, le bras de pétrissage présentant une forme préférentielle,
- la figure 7 est une représentation schématique d'une vue de dessus du bras de pétrissage montré aux figures 6, 8, 9, 18, 23 et 29,
- la figure 8 est une représentation schématique d'une coupe, dans un plan perpendiculaire à sa hauteur, d'un pétrin batteur mélangeur à multiples fonctions de type machine à pain et marmite minute, présentant une sonde thermométrique dans son contre-outil, ledit pétrin illustrant le dispositif de préparation culinaire conformément à la présente invention et ayant été montré aux figures 6, 9 à 11, 18, 23 et 29,
- la figure 9 est une représentation schématique d'une vue en coupe verticale d'un pétrin cuiseur de type machine à pain dans une forme d'exécution préférentielle, ce pétrin présentant une sonde thermométrique dans son contre-outil, ledit pétrin illustrant le dispositif de préparation culinaire conformément à la présente invention,
- la figure 10 est une représentation schématique d'une vue en coupe verticale d'un pétrin cuiseur batteur de type machine à pain ou marmite minute dans une autre forme d'exécution préférentielle, ce pétrin présentant une sonde thermométrique dans son contre-outil, ledit pétrin illustrant le dispositif de préparation culinaire conformément à la présente invention,
- la figure 11 est une représentation schématique d'une vue en coupe verticale d'un pétrin cuiseur batteur de type machine à pain ou marmite minute dans une autre forme d'exécution préférentielle, ce pétrin présentant une sonde thermométrique dans son contre-outil, ledit pétrin illustrant le dispositif de préparation culinaire conformément à la présente invention,
- la figure 12 est une vue partielle d'un pétrin cuiseur de type machine à pain, illustrant le dispositif de préparation culinaire conformément à la présente invention, cette vue partielle étant une coupe de l'extrémité de l'arbre de roulement en fond de cuve pour l'enclenchement d'outils interchangeables dans le pétrin,
- la figure 13 est une représentation schématique d'une vue en coupe verticale d'un pétrin de type à deux bras plongeants, ce pétrin présentant une sonde thermométrique dans son contre-bras, ledit pétrin illustrant le dispositif de préparation culinaire conformément à la présente invention,
- les figures 14 et 15 montrent le contre-bras du type montré à la figure 13, respectivement en vue de face et en vue de dessus,
- la figure 16 montre une vue de dessus d'un couvercle de visualisation, de sécurité et de support de la transmission d'un dispositif de préparation culinaire conformément à la présente invention,
- la figure 17 montre une coupe verticale d'un pétrin de type oblique ou de type marmite minute, illustrant le dispositif de préparation culinaire conformément à la présente invention,
- la figure 18 est une représentation schématique d'une coupe verticale d'un pétrin de type oblique ou de type marmite minute ou de type spirale, illustrant le dispositif de préparation culinaire conformément à la présente invention,
- la figure 19 est une représentation schématique d'une coupe verticale d'un pétrin robot évolutif de type oblique, illustrant le dispositif de préparation culinaire conformément à la présente invention,
- la figure 20 est une représentation schématique d'une coupe verticale d'un pétrin robot évolutif de type spirale ou planétaire, illustrant le dispositif de préparation culinaire conformément à la présente invention,
- la figure 21 est une représentation schématique d'une coupe verticale d'un pétrin cuiseur évolutif de type machine à pain ou marmite minute, illustrant le dispositif de préparation culinaire, avec un outil de travail présentant une forme élaborée selon le premier mode de réalisation conformément à la présente invention,
- la figure 22 est une représentation schématique d'une vue de dessus des figures 19 à 21,
- la figure 23 est une représentation schématique d'une coupe verticale d'un pétrin cuiseur de type marmite minute, illustrant un dispositif de préparation culinaire avec un outil de travail présentant une forme élaborée selon le premier mode de réalisation conformément à la présente invention,
- la figure 24 représente une vue de dessus d'un bras de pétrissage en forme de S selon la figure 23, pouvant être utilisé dans un dispositif de préparation culinaire conformément à la présente invention,
- la figure 25 est une représentation schématique d'une vue en perspective des outils de formes étudiées, notamment d'un pétrin robot de type planétaire, son bras spirale, son contre-outil, doté d'une sonde thermométrique sans fil, et son bras racloir présentant des formes élaborées selon le second mode de réalisation conformément à la présente invention,
- la figure 26 est une représentation schématique d'une vue en perspective un bras spirale et un contre-outil avec sa sonde thermométrique, similaires à ceux de la figure 25, pour notamment un pétrin robot de type planétaire, ce pétrin étant un dispositif de préparation culinaire conformément à la présente invention,
- la figure 27 est une représentation schématique d'une vue en perspective des outils de la figure 25 dans une autre disposition rotative,
- la figure 28 est une représentation schématique d'une vue en perspective d'un bras spirale similaire à celui de la figure 25, notamment pour un pétrin robot de type planétaire, ce pétrin étant un dispositif de préparation culinaire conformément à la présente invention,
- les figures 29, 30 et 31 montrent des outils d'un pétrin robot de type planétaire, spirale et oblique, ce pétrin illustrant le dispositif de préparation culinaire conformément à la présente invention, avec aux figures 29 et 31 respectivement un outil dénommé palette ou feuille et un outil en coupe de formes préférentielles,
- la figure 32 est une représentation schématique en vue latérale d'un pétrin robot de type planétaire évolutif à axe légèrement incliné, illustrant le dispositif de préparation culinaire conformément à la présente invention, ce pétrin étant muni d'éléments préférentiels,
- la figure 33 est une représentation schématique d'une coupe verticale d'un pétrin cuiseur de type marmite minute ou éventuellement machine à pain, illustrant le dispositif de préparation culinaire conformément à la présente invention, ce pétrin étant avantageusement muni d'un nouvel outil racloir et/ou de brassage lent anti-aération,
- la figure 34 est une représentation schématique d'un ensemble d'outils d'un pétrin horizontal novateur, notamment d'un pétrin robot planétaire, illustrant le dispositif de préparation culinaire conformément à la présente invention, ce pétrin étant muni d'un bras spirale et d'un contre-bras de formes préférentielles, et d'une paroi intérieure de cuve épousée par le profil du bras et du racloir en extérieur,
- la figure 35 est une représentation schématique d'une vue en coupe verticale d'un pétrin cuiseur du type machine à pain à boule ou classique, illustrant le dispositif de préparation culinaire conformément à la présente invention, ce pétrin étant doté d'un ensemble couvercle de forme préférentielle, ce couvercle étant retournable,
- la figure 36 est une représentation schématique d'une vue en coupe verticale d'un pétrin robot discontinu, illustrant le dispositif de préparation culinaire conformément à la présente invention, ce pétrin comportant avantageusement un couvercle retournable,
- la figure 37 est une représentation schématique d'une vue latérale d'un support d'outils d'un pétrin robot de type planétaire, illustrant le dispositif de préparation culinaire conformément à la présente invention, ce support d'outils présentant des éléments pour faciliter les montage et démontage aisés des outils les uns par rapport aux autres.

Dans ce qui va suivre, le dispositif de préparation culinaire va être illustré principalement par divers types de machines appelées pétrins. Par pétrin, il est entendu une machine de pétrissage d'un ingrédient pâteux, notamment de la pâte à pain. Il convient de préciser que cela n'a pas un caractère limitatif et que le dispositif selon l'invention n'est pas limité à la fabrication du pain avec ou sans ingrédients ajoutés.

Des formes préférentielles du dispositif selon l'invention sont aussi décrites en conjonction avec un type spécifique de pétrin. Il est aussi à préciser que ces formes ne sont pas limitées à une application à ce type spécifique de pétrin mais peuvent aussi s'appliquer à d'autres types de dispositif culinaire présentant des dispositions similaires.

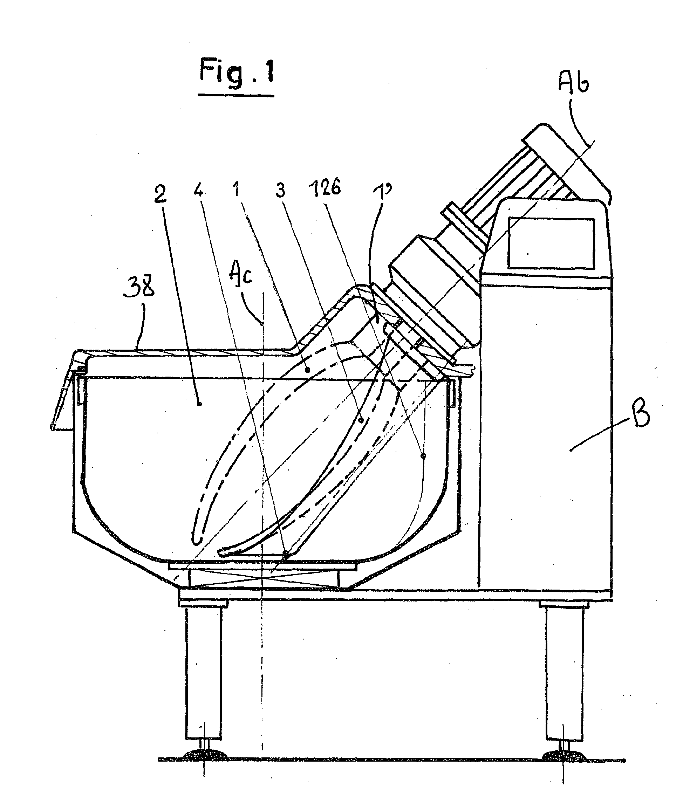

Le dispositif de préparation culinaire illustré à la figure 1 est un pétrin de type oblique.

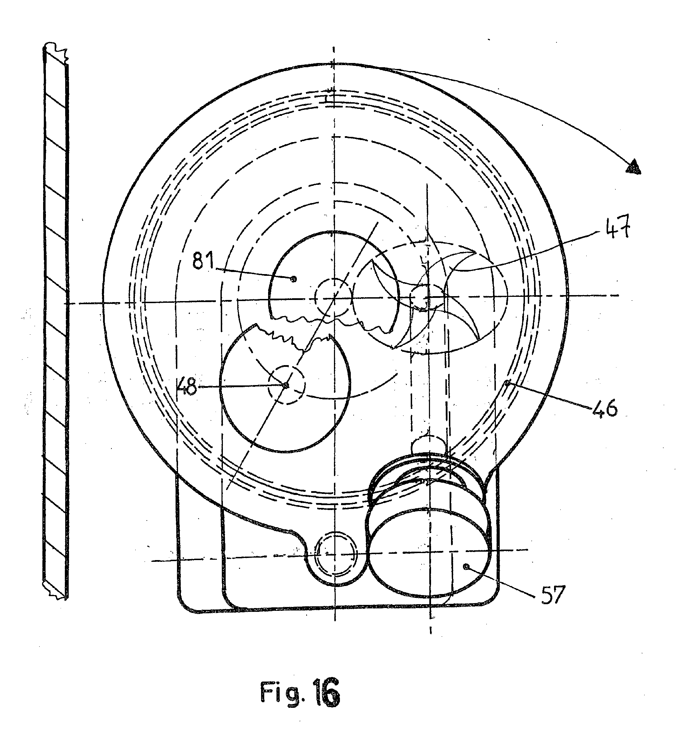

Ce pétrin comprend un bâti B qui supporte une cuve 2 contenant des ingrédients culinaires à mélanger et à malaxer. Il est à noter aussi que dans certaines formes de réalisation de l'invention, ces ingrédients peuvent aussi être coupés et/ou pressés dans la cuve pour en extraire un jus, comme il sera vu aux figures 16, 17 à 19, 32.

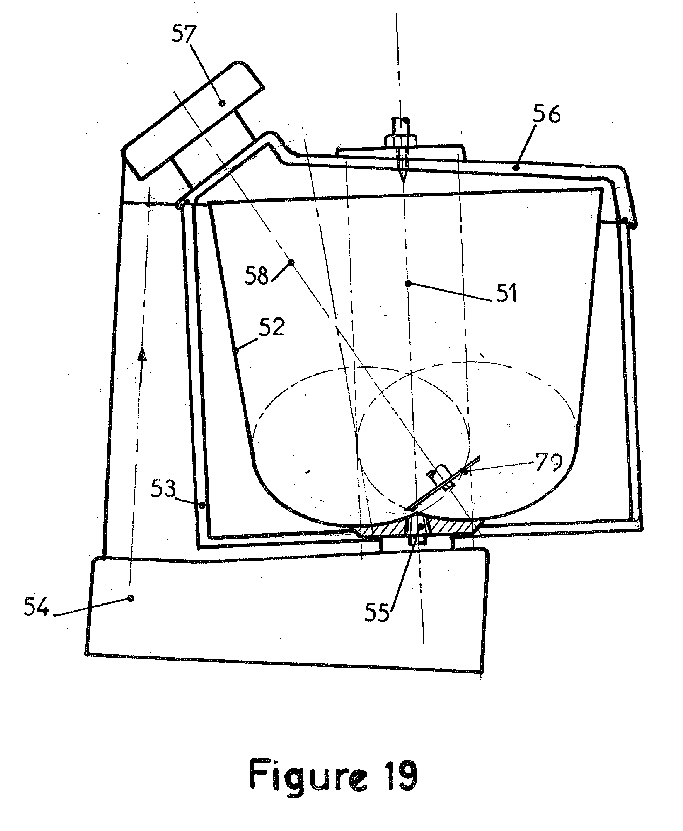

La cuve 2 est sensiblement symétrique par rapport à son axe central Ac s'étendant, à cette figure, verticalement. Pour toutes les figures qui vont suivre, il sera fait référence à une cuve à fond sensiblement horizontale pour désigner une cuve occupant une position avec un axe central vertical, ou faiblement incliné par rapport à la verticale, mais il est évident que la cuve peut occuper une position plus penchée avec son axe central formant un angle plus important avec la verticale que montré aux figures 19 à 21, 32. Dans ce cas, l'outil de travail est disposé en correspondance dans la cuve avec ou sans racloir 126.

Cette cuve 2 peut être aussi tournante autour de son axe central Ac mais ce n'est pas du tout obligatoire, étant donné qu'il est suffisant qu'un outil de travail le soit, pour effectuer une action de mélange dans la cuve du dispositif. Avantageusement, un couvercle 38 recouvre la cuve 2, ce couvercle 38 présentant un passage pour une barre 1' qui va maintenant être décrite.

A la figure 1, une barre 1' s'étend autour d'un axe oblique Ab et présente une première extrémité qui pénètre dans la cuve 2, cette première extrémité portant des outils 1 et 3 effectuant leur action à l'intérieur de ladite cuve 2. Il est aussi possible à une telle barre 1' de s'étendre verticalement au dessus du centre de la cuve 2, par exemple avec son axe longitudinal confondu avec l'axe vertical médian Ab de la cuve 2.

La seconde extrémité de la barre 1' est située à un niveau de hauteur supérieure à celui de la cuve 2 et comporte des moyens de maintien et d'entraînement 8 des outils 1 et 3, ces outils pouvant ainsi être mis en mouvement à l'intérieur de la cuve 2.

Le dispositif de préparation culinaire comprend, à la première extrémité de la barre 1', un premier outil ou outil de travail 1 qui est mobile en rotation autour de l'axe oblique Ab de la barre 1'.

Un second outil faisant office de contre-outil 3 est disposé au voisinage du premier outil 1, ceci selon un angle d'orientation préférentiel par rapport à la paroi intérieure de la cuve 2. A la figure 1, ce contre-outil 3 est aussi mobile en rotation autour de l'axe oblique Ab mais ce n'est pas obligatoire dans tous les modes de réalisation du dispositif de préparation culinaire selon l'invention.

Le contre-outil 3 coopère avec le premier outil de travail 1 afin d'effectuer une action de mélange et/ou de malaxage des ingrédients disposés dans la cuve 2, la partie active du contre-outil 3 venant à proximité de la partie active du premier outil de travail 1.

Une caractéristique importante de la présente invention est de munir l'intérieur de la cuve 2 d'une sonde thermométrique 4. Celle-ci est, avantageusement, à disposer le plus près possible des ingrédients afin que la température qu'elle relève soit représentative de la température des ingrédients à l'intérieur de la cuve 2.

Dans le mode de réalisation de la figure 1, c'est le contre-outil 3 qui porte la sonde thermométrique 4. La sonde 4 est avantageusement intégrée dans la base du contre-outil 3. Cette sonde 4 est avantageusement une mini-sonde afin de réduire son encombrement. Elle permet de connaître la température des ingrédients disposés dans la cuve et ainsi d'améliorer le travail effectué par le dispositif de préparation culinaire, par exemple le malaxage d'une pâte contenue dans la cuve dudit dispositif, le flux de pâte étant principalement concentré en périphérie de l'outil.

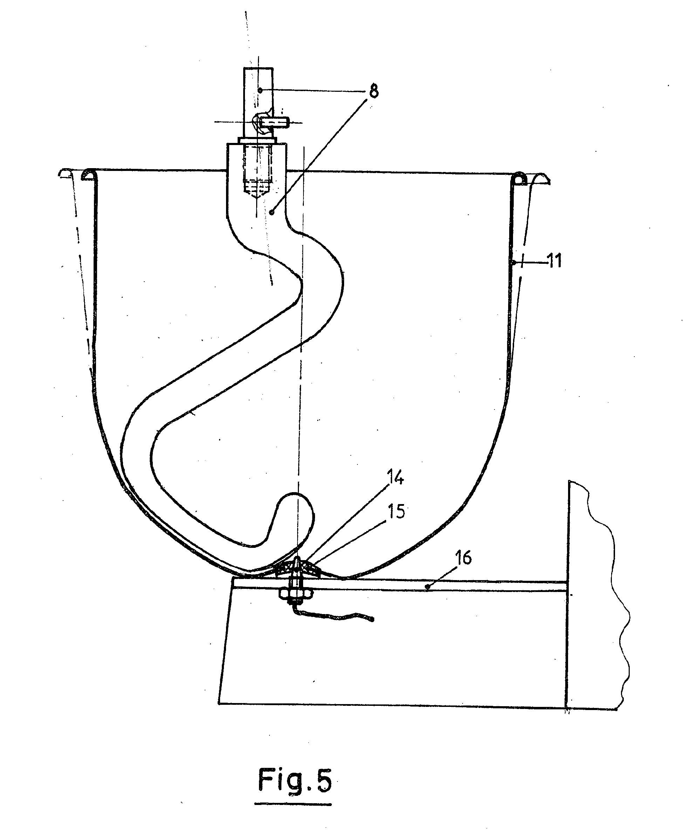

En alternative, cette sonde thermométrique peut aussi être portée par un autre élément présent dans la cuve 2. Ceci sera expliqué ultérieurement en regard de la figure 5.

La sonde peut être sans fil dans la cuve quand celle-ci est tournante ou quand elle est placée sur un contre-outil tournant, auquel cas, elle est avantageusement télé-alimentée par induction d'une bobine. Elle peut aussi être avec fil dans le cas d'une cuve non tournante quand placée directement sur celle-ci ou quand placée sur un contre-outil dans le cas d'un contre-outil non tournant.

Dans le cas non limitatif de la cuisson d'une pâte, la présence d'une sonde thermométrique dans la cuve, directement sur celle-ci ou portée par un élément se trouvant dans celle-ci, offre la possibilité de réguler le fonctionnement du ou des outils, celui-ci ou ceux-ci pouvant être interchangeables, par exemple sa ou leur vitesse, les durées des fermentations successives avec rafraîchis, la durée d'apprêt et de la cuisson, ceci par rapport à l'évolution de la température au coeur de la pâte.

Ainsi, la présente invention concerne aussi un procédé de régulation d'un dispositif culinaire présentant une unité de commande centrale des paramètres de fonctionnement du dispositif, caractérisé en ce qu'au moins un paramètre de fonctionnement du dispositif est régulé en fonction de la température mesurée par la sonde thermométrique.

A titre d'exemples non limitatifs, il est possible, quand la mesure de température de la sonde montre une température trop basse ou trop chaude des ingrédients, de déclencher respectivement des systèmes de chauffage ou de refroidissement. Il est aussi possible, selon la température mesurée, d'augmenter ou de diminuer la vitesse de rotation de l'outil de travail et, le cas échéant, de son contre-outil, ainsi que la durée d'opération du dispositif.

Il est aussi possible d'effectuer cette régulation selon des programmes/recettes pré-établis en agissant sur la vitesses de rotation des outils, contre-outils, racloir ou de la cuve et sur la durée de travail des différents outils interchangeables dans les opérations consécutives du dispositif culinaire telles que le frasage, l'autolyse, le pétrissage, le battage, le fouettage, le mélange, la coupe, la fermentation, les rafraîchis successifs, l'apprêt, la cuisson, la conservation. Ces programmes/recettes peuvent aussi servir au maintien et à la régulation des températures au coeur des ingrédients en pouvant réguler et déclencher les systèmes de chauffe et/ou de refroidissement.

De multiples programmes/recettes pré-établis de par un automatisme approprié peuvent ainsi permettre une utilisation quotidienne simplifiée avec un pupitre afficheur de multi-recettes et de suivi, pupitre déjà disponible sur le marché. Il est possible aussi d'utiliser une télécommande avantageusement commune à plusieurs dispositifs culinaires tels que machine à pain, robot, préparateur culinaire et four afin d'assurer les cycles selon lesdits programmes/recettes élargis à tous ces dispositifs différents et complémentaires notamment en cuisine. Cela peut être fait aussi bien en automatique qu'en semi-automatique ou qu'en mode manuel.

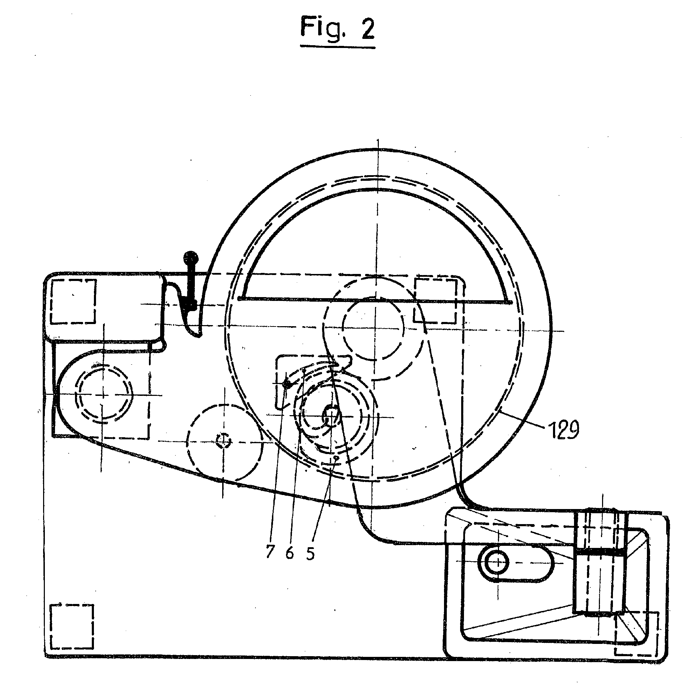

La figure 2 montre un pétrin de type spirale. Ce pétrin comprend un bras spirale 5 faisant office d'outil de travail. Autour et à proximité de ce bras 5, est disposé un contre-outil 6 portant une sonde thermométrique 7. Cette sonde 7 présente un angle d'orientation adéquat par rapport à la paroi intérieure de la cuve. Cette sonde 7 est implantée sur le contre-outil 6 afin que la température qu'elle relève soit représentative de la température des ingrédients dans la cuve. La référence 129 indique le couvercle de la cuve.

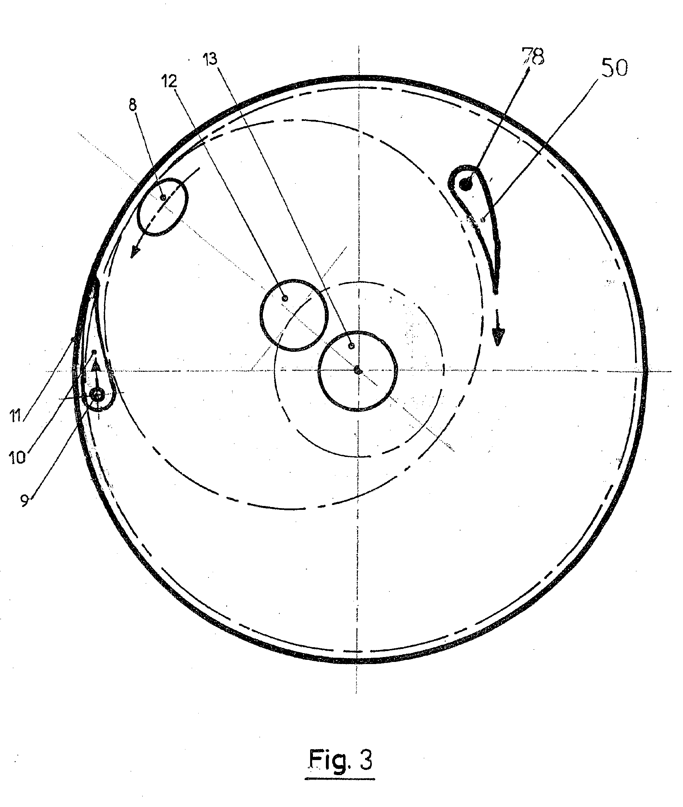

La figure 3 montre un pétrin batteur mélangeur de type planétaire avec outils contre rotatifs. L'outil de travail est un bras spirale 8 relié à un arbre satellite 12. Le pétrin comprend, en outre, un racloir/contre-outil 10 qui est relié au plateau planétaire tournant 13. Le racloir/contre-outil présente une lame racleuse 10 de forme particulière et avantageusement moulée sur insert pour racler la paroi de la cuve 11.

Cet insert peut être, par exemple, en fonderie d'aluminium, en fonte ou en inox recouvert d'un moulage, par exemple, en polyuréthane 90/95 Schorres de qualité alimentaire ou dans d'autres matériaux équivalents anti-abrasion tels que silicone etc...

Ce racloir/contre-outil complète le travail d'un contre-outil 50 portant la sonde thermométrique 78.

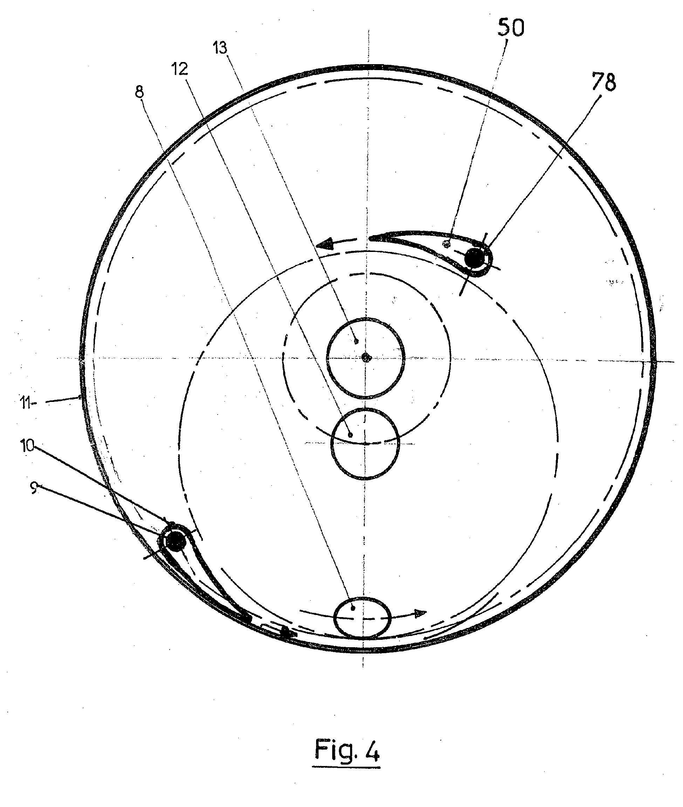

La figure 4 montre un pétrin batteur mélangeur de type planétaire en cuve non tournante et de type spirale en cuve tournante avantageusement à mouvements corotatifs dans une autre disposition du racloir/contre-outil par rapport à l'arbre satellite 12 et au bras spirale 8 que pour la figure 3.

La figure 5 montre un mode d'emplacement de la sonde thermométrique autre que sur un contre-outil pour un pétrin batteur mélangeur de type planétaire à cuve non tournante, cette disposition n'étant cependant pas limitée à ce type de pétrin. Ce pétrin comporte un bras spirale 8 et une pièce souple 15 est disposée en fond de cuve en étant étanche aux ingrédients contenus dans cette cuve 11. Cette pièce souple 15 permet, de par sa conception, l'incorporation d'une sonde thermométrique 14 indirectement fixée à un socle 16 supportant la cuve 11.

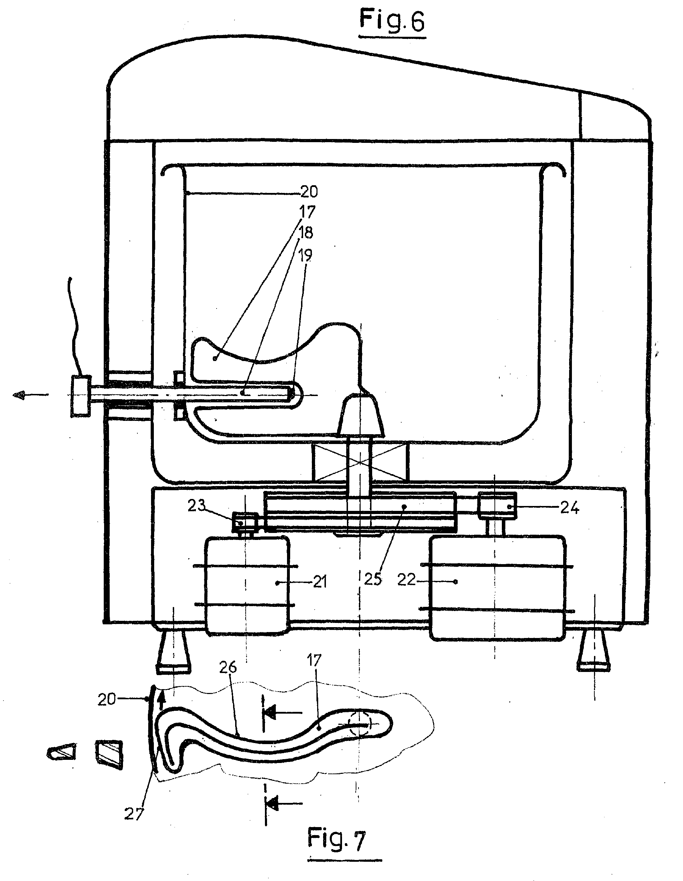

La figure 6 montre un pétrin cuiseur de type machine à pain, cette machine étant constituée d'une cuve 20, d'un bras 17 formant l'outil de travail, d'un contre-bras 18, formant le contre-outil, coulissant et portant une sonde thermométrique 19 à son extrémité.

L'entraînement de l'outil de travail est différent de ceux montrés précédemment. Cet entraînement s'effectue par le fond de la cuve 20 en pénétrant avantageusement par le milieu du fond de cette cuve 20.

Il est prévu un premier moteur 21 avec une poulie motrice 23 ainsi qu'un second moteur 22 avec une autre poulie motrice 24. Ces deux poulies motrices 23 et 24 sont reliées à une même poulie menée 25 elle-même reliée à l'axe d'entraînement du bras 17, cet axe traversant le fond de la cuve 20. Cela permet de pouvoir assumer avec différents outils interchangeables des fonctions élargies nécessitant une large plage de vitesses. Cet entraînement n'est pas limité à une installation en dessous de la cuve et peut être utilisé pour l'entraînement de l'outil de travail en étant disposé autrement, par exemple au dessus de la cuve ou latéralement à celle-ci à travers une de ses parois.

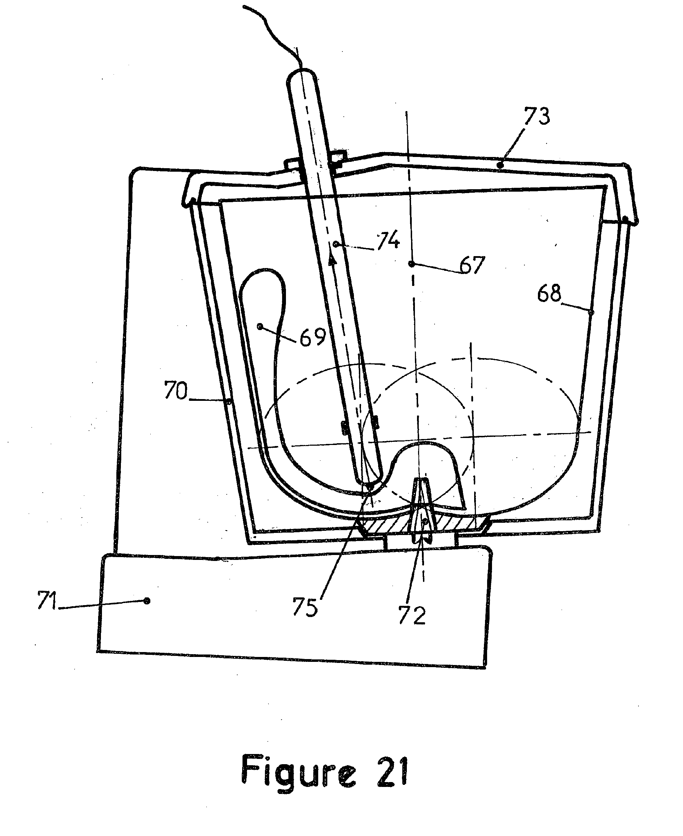

L'outil de travail de cette figure, sous la forme du bras 17, présente une forme spécifique pouvant être selon une première forme de réalisation de l'outil de travail selon la présente invention. Les caractéristiques de cette forme spécifique seront détaillées ultérieurement en regard des figures 21 à 23.

Dans le mode de réalisation du dispositif montré à cette figure 6, le contre-outil 18 s'étend horizontalement dans la cuve 20 en traversant une paroi de la cuve 20 et présente à son extrémité libre la plus intérieure à cette cuve 20 une sonde 19 thermométrique. Quand le contre-outil 18 est en regard du bras 17 formant l'outil de travail, ce contre-outil 18 s'étend aussi à l'intérieur de ce bras 17 dans un logement pratiqué dans ledit bras et s'étendant aussi horizontalement.

Comme ledit bras 17 s'étend dans cette position jusqu'à la paroi traversée par le contre-outil 18, la presque totalité ou au moins la majeure partie du contre-outil 18 pénétrant dans la cuve 20 est alors reçue à l'intérieur du bras 17.

Comme il est visible à la figure 7, sur un pétrin cuiseur de type machine à pain ou marmite minute, le bras de pétrissage 17 peut bénéficier d'une forme spécifique élaborée pour aérer les pâtes en synergie avec la paroi de la cuve 20 et le contre-outil constitué par le contre-bras qui était référencé 18 à la figure 6. En face de la paroi de la cuve 20, le bras de pétrissage 17 présente une partie d'extrémité recourbée 27 afin d'accroître la surface du bras 17 en regard de la paroi de la cuve 20. La partie médiane du bras 17 présente aussi une ondulation 26 concave.

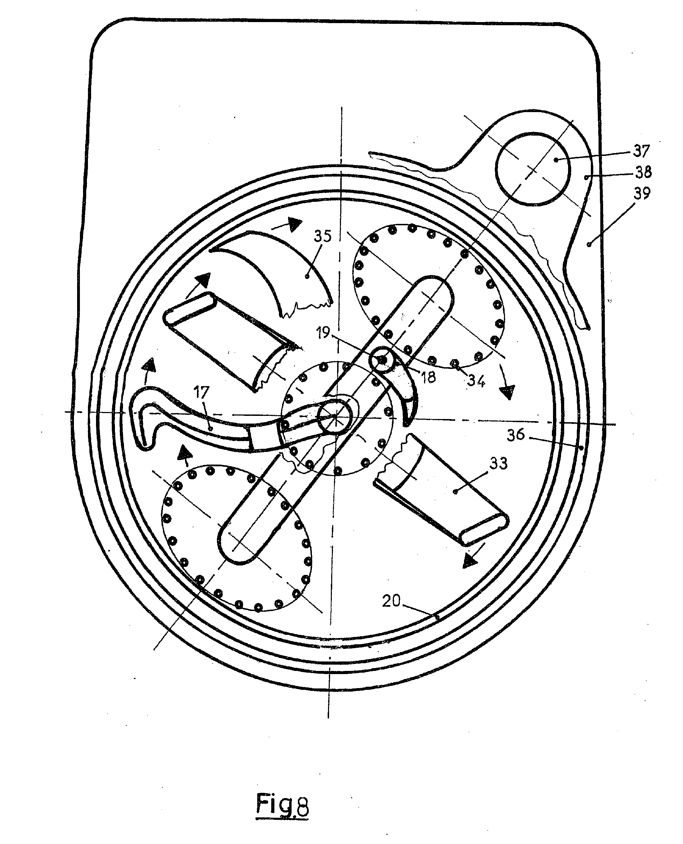

Les figures 8 à 11 montrent un pétrin batteur mélangeur à fonctions élargies de type machine à pain et marmite minute. Il est courant qu'un tel pétrin soit muni de plusieurs outils interchangeables, par exemple un bras de pétrissage 17, une palette 33 pour battre les crèmes, des fouets 34 pour fouetter et/ou mélanger les liquides contenus dans la cuve 20 et un outil de coupe 35 des ingrédients, ceux-ci pouvant être des légumes, fruits, viandes ou poissons.

Ces outils 17, 33, 34 et 35 ou une partie de ceux-ci peuvent tourner autour ou sous un contre-outil 18 à profil adapté portant une sonde thermométrique 19. Ce pétrin présente aussi un couvercle de visualisation 38 qui peut être relevé par coulissement avec un plot 37 pénétrant dans le bâti. Le pétrin peut aussi comporter une enceinte 36 entourant sa cuve 20 ainsi qu'un socle 39.

A la figure 8, l'outil fouet 34, en tant qu'outil de travail, est constitué d'un fouet central entraîné par un dispositif d'entraînement en rotation et de deux fouets périphériques à rotation libre, ceux-ci étant entraînés par le flux des ingrédients à l'intérieur de la cuve 20, bien qu'il soit possible aussi de les entraîner d'une autre manière.

L'outil fouet pour les liquides est avantageusement doté de fils rigides élastiques et, à l'intérieur du fouet, de brins souples pour aspirer les liquides fouettés et faciliter le traitement des petites quantités sur une large plage avec plus d'efficacité.

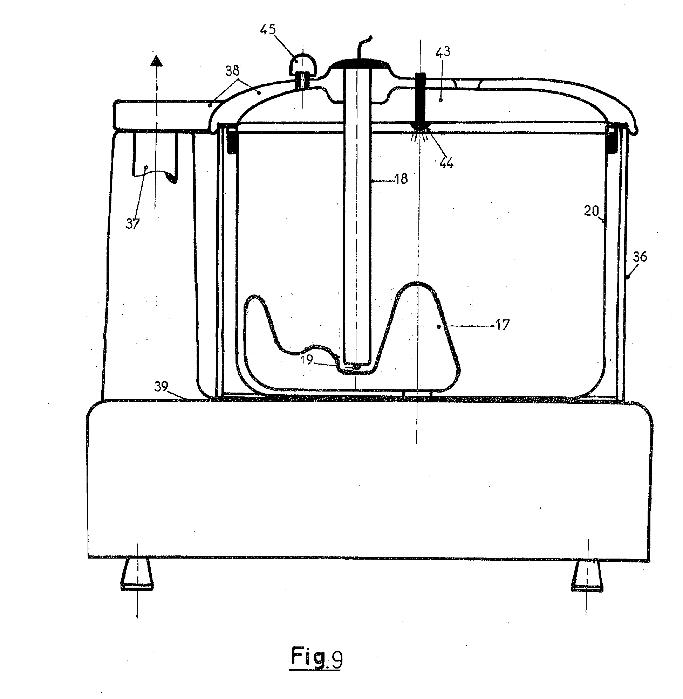

A la figure 9, une buse 44 de pulvérisation d'air et/ou de buée à l'intérieur de la cuve 20 est visible. Cette figure montre, en outre, un outil de travail 17 présentant une forme pouvant être selon la première forme de réalisation de l'outil de travail selon la présente invention. Les caractéristiques de cette forme spécifique seront détaillées ultérieurement en regard des figures 21 à 23.

L'outil de travail 17 coopère avec un contre-outil 18 portant une sonde 19 et introduit dans la cuve 20 du dispositif en traversant son couvercle 38, ce contre-outil 18 pouvant être coulissant et retirable de cette cuve 20.

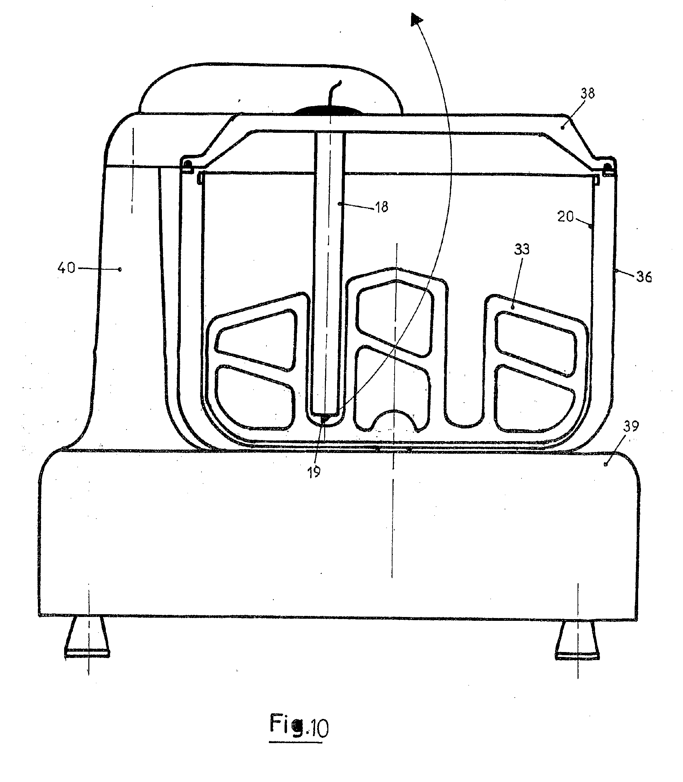

La figure 10 montre un outil-palette 33 comme outil de travail.

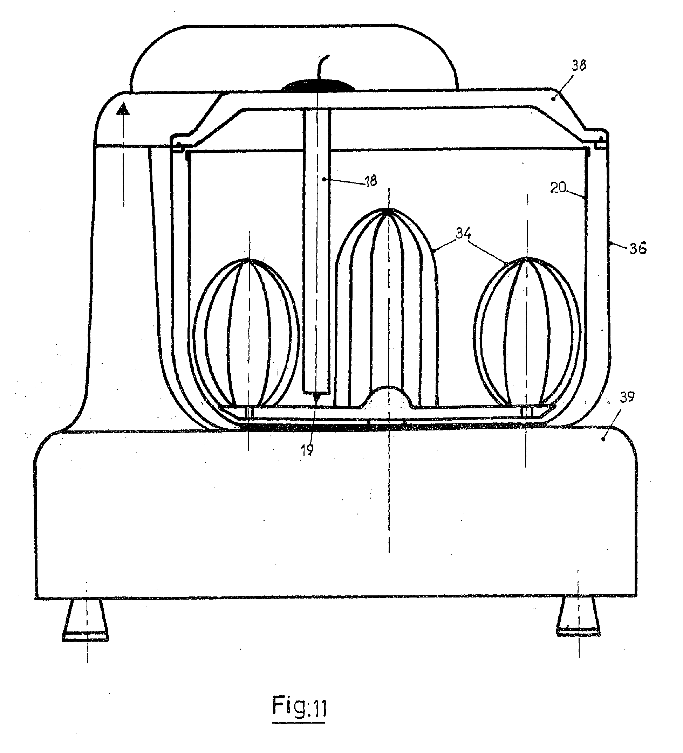

La figure 11 montre un pétrin cuiseur batteur mélangeur de type machine à pain ou marmite minute. Ce pétrin est doté d'un outil fouets 34 formant l'outil de travail et tournant autour d'un contre-outil 18 portant la sonde 19, comme déjà montré aux figures 8, 9 et 10. Le contre-outil 18 pénètre dans la cuve 20 à travers le couvercle 38 de celle-ci tandis que l'ensemble de l'outil fouets 34 est entraîné à travers le fond de la cuve 20.

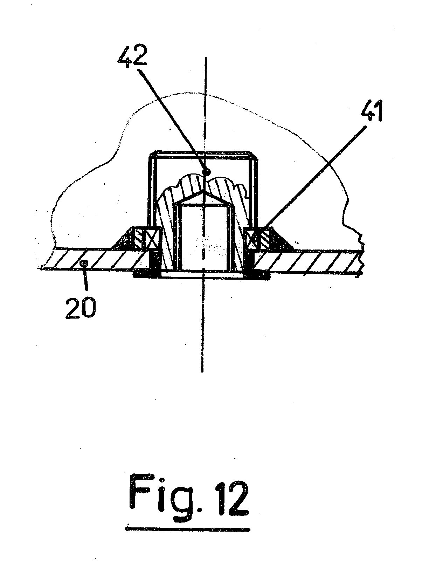

La figure 12 montre un détail d'un pétrin cuiseur de type machine à pain. La cuve 20 de ce pétrin comprend, en partie médiane de son fond, une extrémité d'un arbre 42 d'un roulement étanche 41. Cette extrémité d'arbre en partie supérieure permet l'enclenchement des outils interchangeables et s'encastre en sa partie inférieure dans l'arbre de transmission de l'entraînement d'outil.

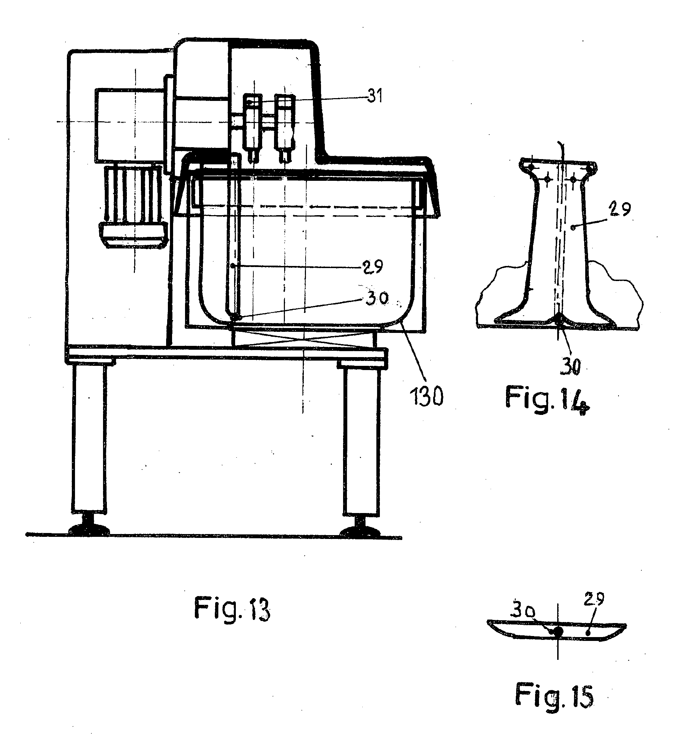

La figure 13 montre un pétrin de type à deux bras articulés 31 et 32. Ces deux bras 31 et 32 plongent dans une partie de cuve 130 tournante entraînée avec l'intégration d'un contre-bras 29 portant la sonde thermométrique 30 relié à la tête relevable. L'outil de travail, selon la présente invention, peut ainsi être double.

Les figures 14 et 15 complètent la figure 13 en montrant la forme du contre-bras 29 respectivement en vue de face et en vue de dessus.

La figure 16 montre une vue de dessus d'un couvercle de visualisation et de sécurité et pouvant servir au moins partiellement de support de l'entraînement des outils. Cet entraînement est de préférence compact et le pétrin peut être de type oblique 57 soit spirale ou planétaire ou soit marmite minute 81. Les lames de coupe 47 utilisées à cette figure sont de type oblique.

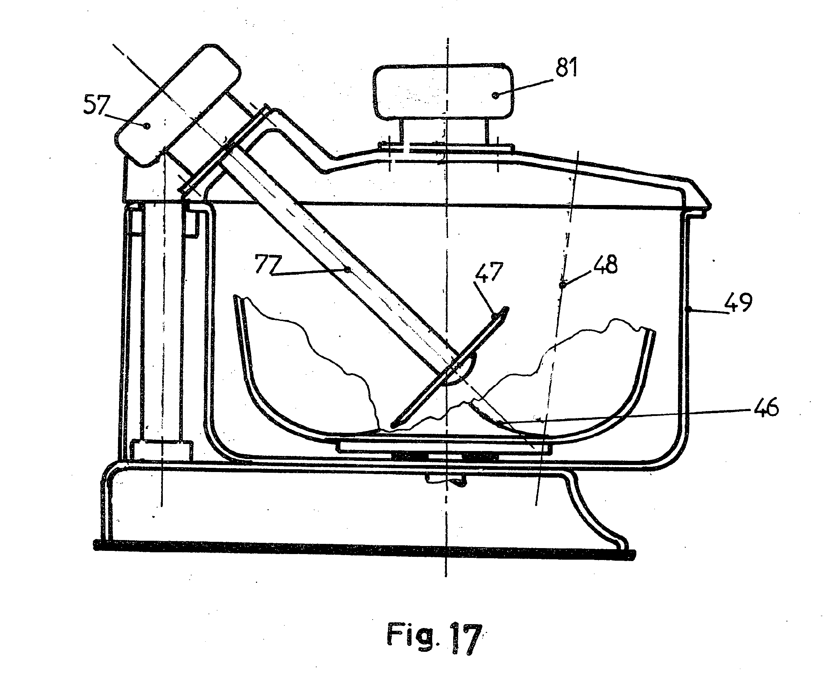

La figure 17 montre un pétrin soit de type oblique 57 avec son outil de coupe interchangeable 47 à axe oblique 77 soit en type marmite minute avec sa transmission compacte 81 ou soit en type spirale ou planétaire sur un axe 48, tous ces types étant dotés d'une cuve 46 tournante ou non, éventuellement entourée d'une enceinte thermique 49.

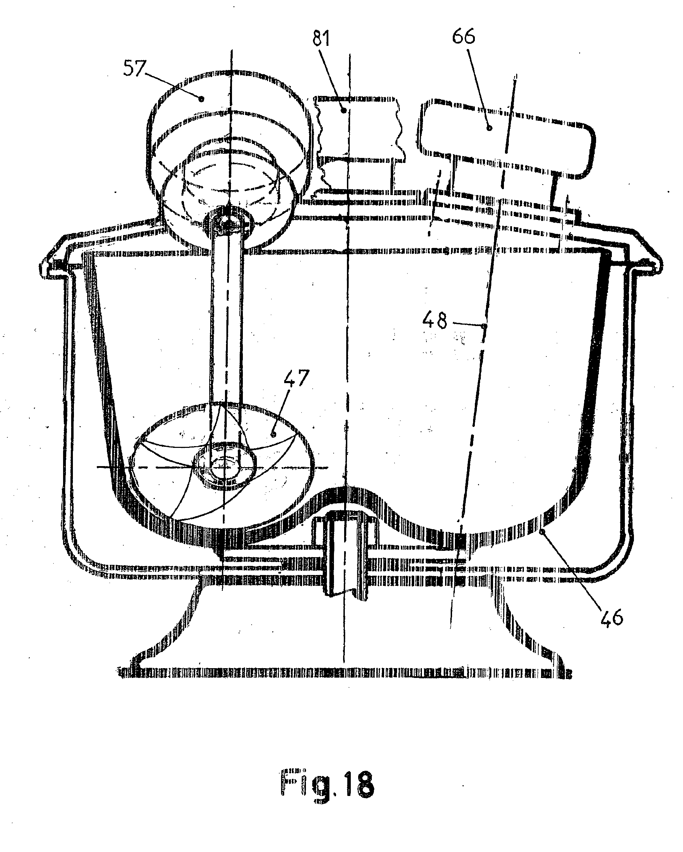

La figure 18 montre un pétrin soit de type oblique 57 par exemple doté d'un outil interchangeable de coupe 47, soit d'une transmission compacte 81 de type marmite minute ou soit le pétrin est de type spirale ou planétaire selon un axe 48, ceci avec une cuve 46 tournante ou non. A cette figure, l'axe d'outil de travail 47 est faiblement incliné par rapport à la verticale.

La figure 19 montre un pétrin robot évolutif de type oblique à 55°. L'axe oblique 58 de l'outil de travail 79 est incliné de 55° par rapport à un plan horizontal. La cuve 52, pouvant être de forme circulaire, présente son axe médian 51 légèrement incliné par rapport à la verticale. De préférence, l'axe vertical de la cuve 52 est légèrement incliné par rapport à la verticale de l'ordre de 2 à 9° afin de favoriser l'aération des ingrédients et le bon traitement des petites quantités, le cas échéant, avec le travail des outils interchangeables en synergie avec le contre-outil.

La cuve 52 peut être moulée ou emboutie et peut se composer en diverses matières telles qu'acier inoxydable, polypropylène, verre borosilicate, aluminium, etc...

L'axe oblique 58 d'outil 79 est entraîné par une transmission compacte 57, tandis que la cuve 52 présente un arbre cannelé d'entraînement 55. Le pétrin se compose aussi d'un outil interchangeable de coupe 79, d'un bâti de pied 54 et d'un couvercle 56 de sécurité ainsi que de visualisation et de support de transmission, ce couvercle 56 recouvrant l'ouverture supérieure de la cuve 52.

Il est à remarquer, à cette figure, que l'outil 79 est entraîné en rotation de même que la cuve 52, ces deux éléments présentant leur entraînement spécifique. Il est aussi possible, dans d'autres dispositifs culinaires à cuve tournante, que celle-ci soit entraînée alors que l'outil de travail 79 reste solidaire ou non de cette cuve 52.

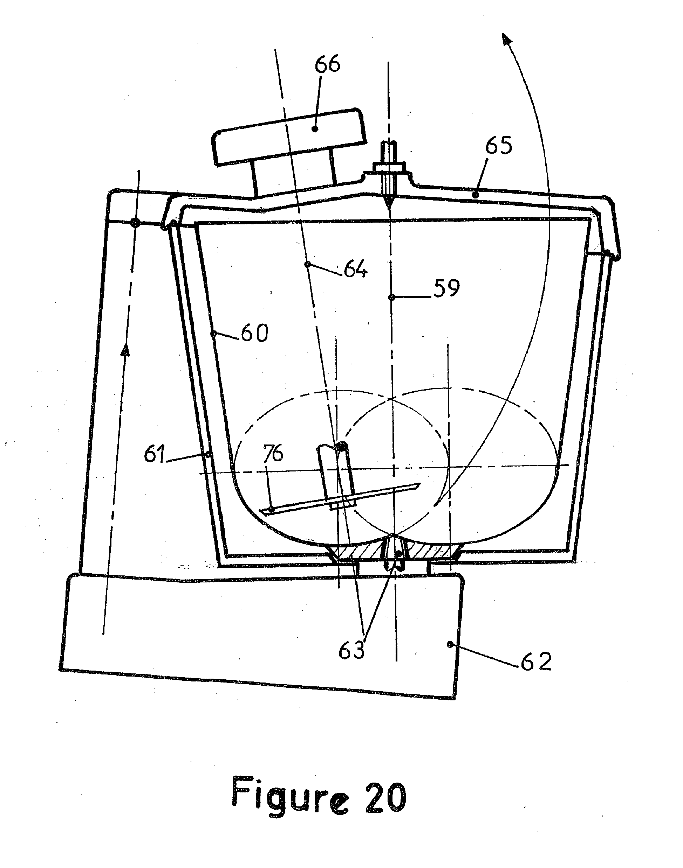

La figure 20 montre un pétrin robot évolutif de type spirale ou planétaire avec une cuve circulaire 60. Ce pétrin peut être identique au type oblique présenté à la figure 19. Il présente une cuve 60 à axe médian légèrement incliné 59 par rapport à la verticale et entraînée par un arbre cannelé 63. La cuve 60 est supportée par un bâti de pied 62 et est entourée d'une enceinte thermique 61. Dans la cuve 60, s'étend partiellement un axe 64 d'outil interchangeable 76, cet axe 64 sortant de la cuve à son extrémité supérieure qui est reliée à une transmission compacte 66.

Ledit axe 64 traverse ainsi le couvercle 65 de sécurité et de visualisation recouvrant la partie supérieure de la cuve 60. A cette figure, il existe un angle aigu de valeur faible entre l'axe 64 de l'outil interchangeable 76 et l'axe médian 59 de la cuve 60, ce dernier axe 59 pouvant lui-même être faiblement incliné par rapport à la verticale.

La figure 21 montre un pétrin cuiseur évolutif de type machine à pain ou marmite minute avec, en type marmite minute, un passage du contre-outil 74 à travers le couvercle 73. Une cuve 68, pouvant par la taille être identique aux types oblique, spirale et planétaire représentés aux figures 19 et 20, présente des parois et un axe médian 67 légèrement inclinés par rapport à la verticale. L'outil de travail 69, sous forme d'un bras, peut être entraîné en type machine à pain à travers le fond de la cuve 68 par un arbre cannelé 72 sortant d'un socle formant bâti de pied 71 de l'enceinte thermique 70 enveloppant la cuve 68.

Le bras 69 coopère avec le contre-outil 74 portant une sonde thermométrique 75, ce contre-outil 74 étant coulissant dans cette cuve 69 et relevable par son couvercle de visualisation 73.

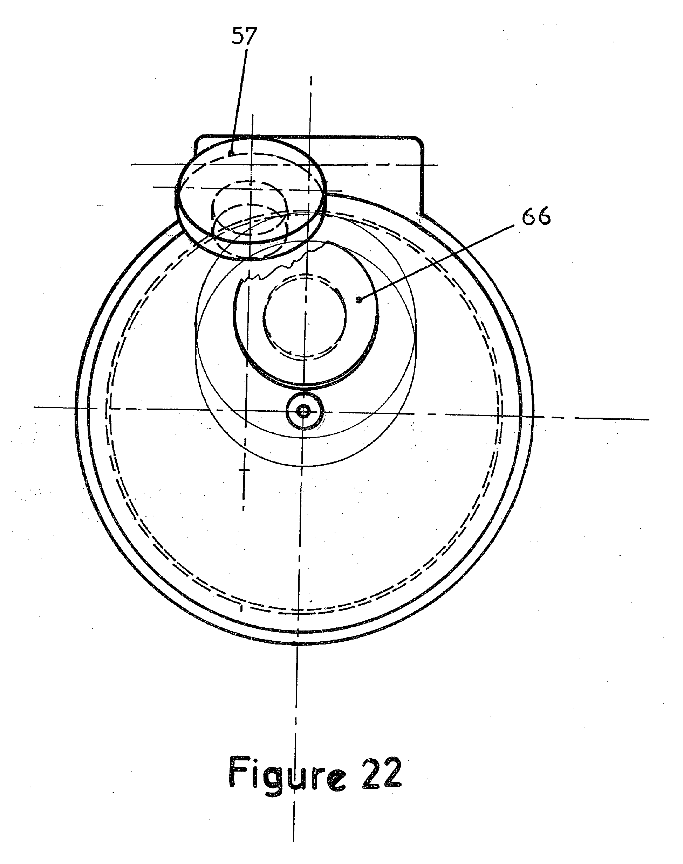

La figure 22 montre une vue de dessus du pétrin des figures 19, 20 et 21. Les transmissions compactes de type oblique 57, spirale et planétaire 66 sont visibles à cette figure.

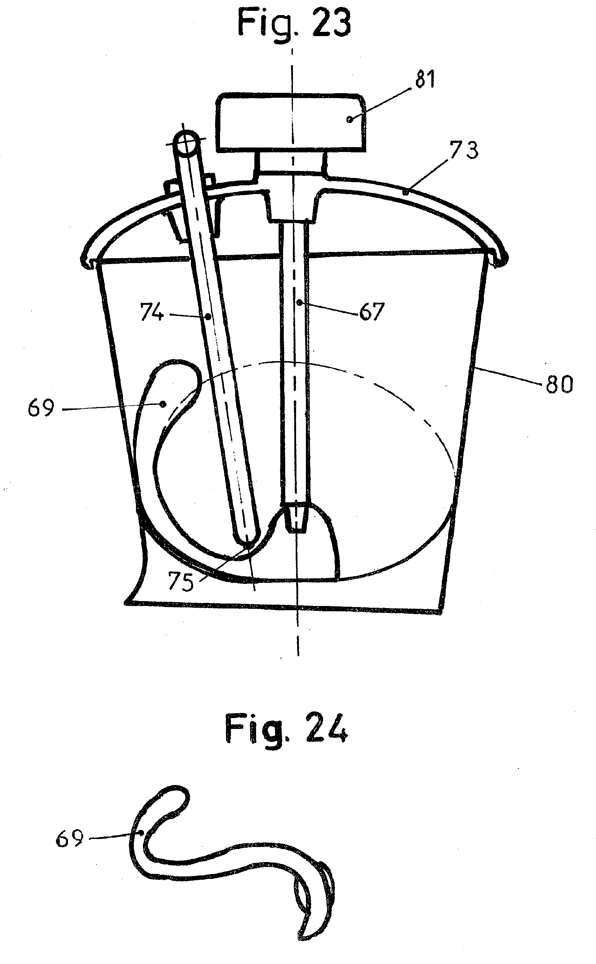

La figure 23 montre un pétrin cuiseur de type marmite minute. Ce pétrin permet, à taille égale, d'avoir un bras de pétrissage 69 similaire à celui du pétrin du type machine à pain présenté en figure 21, mais à la différence que son entraînement se fait par le haut de la cuve 80, à travers son couvercle 73 et non par le fond de la cuve.

Contrairement à l'entraînement du bras de la figure 21, le bras de pétrissage 69 de la figure 23 est entraîné par un arbre 67 plongeant à travers le couvercle 73 de la cuve 80 et s'encastrant par exemple par un embout cannelé dans la partie haute centrale de l'outil 69, l'autre extrémité de l'arbre 67 étant reliée à une transmission compacte 81.

L'outil de travail, sous forme du bras de pétrissage 69, travaille en synergie avec un contre-outil 74 portant une sonde thermométrique 75. Ce contre-outil 74 peut être coulissant dans et retirable de la cuve 80. La cuve 80 marmite peut ou non être de forme identique aux autres types représentés aux figures 19, 20 et 21. Elle peut par exemple être à fond plat et avantageusement dotée d'un fond cuiseur en multicouches de matériaux thermiques comme il existe déjà en casseroles et faitouts de cuisine.

Le fond de la cuve peut être à couronne de forme semi elliptique à environ 55°. En général, les dimensions de la cuve, notamment sa profondeur et/ou son diamètre de même que son inclinaison, peuvent être choisies afin de faciliter l'intégration de plusieurs outils interchangeables à sections ou longueurs différentes.

Pour ordre d'idée, pour une cuve de cinq litres, il peut être choisi un diamètre d'environ 230 mm et une profondeur de 180 mm avec une grande longueur d'axe d'ellipse de 120 mm. Cette cuve peut être évasée en partie supérieure pour une meilleure visualisation de son intérieur et/ou faciliter son accès à partir de l'extérieur.

Il est à noter que les figures 21 et 23 illustrent, entre autres figures, un premier mode de réalisation d'un outil de travail conformément à la présente invention, cet outil étant essentiellement conçu sous la forme d'un bras 69, une majeure partie de la surface du bras 69 tournée vers l'extérieur de la cuve 68 ou 80 faisant alors face à une partie de la paroi de la cuve 68 ou 80 et une partie du fond de la cuve en étant appliquée contre elles, ledit bras 69 s'étendant en forme de S, les références 68 ou 80 étant celles respectivement de la figure 21 et de la figure 23. Pour la figure 23, seule l'extrémité libre du bras 69 est décalée de la partie de paroi et légèrement recourbée vers l'intérieur de la cuve 80.

La figure 24 représente une vue de dessus d'un bras 69 destiné à être entraîné par le haut de la cuve tout en étant appliqué contre des parties de paroi et de fond de la cuve, comme montré à la figure 23. Ce bras de pétrissage présente dans cette vue de dessus une forme de S, laissant désormais une marque ou une empreinte dans lors de la cuisson.

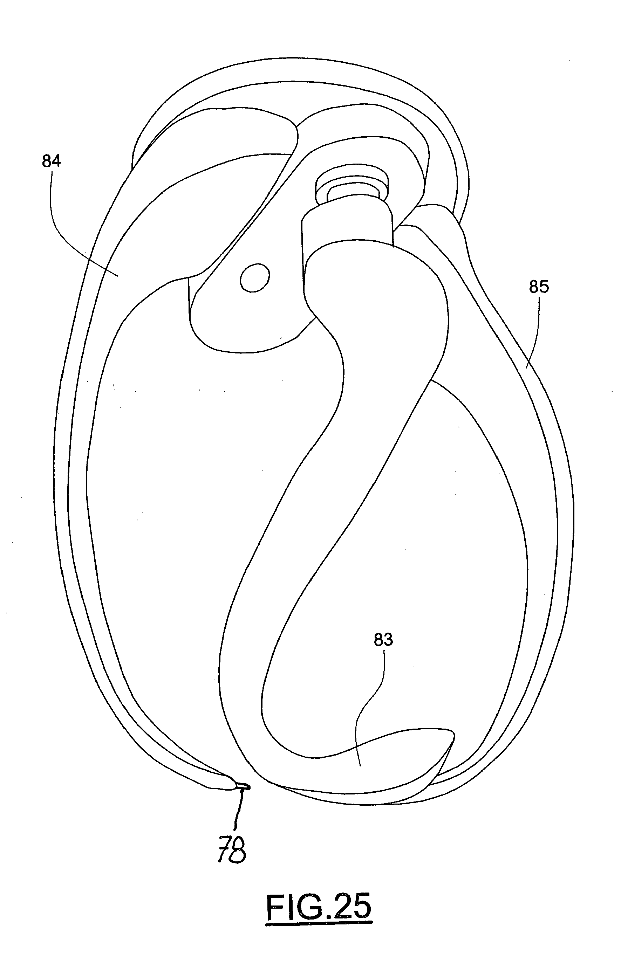

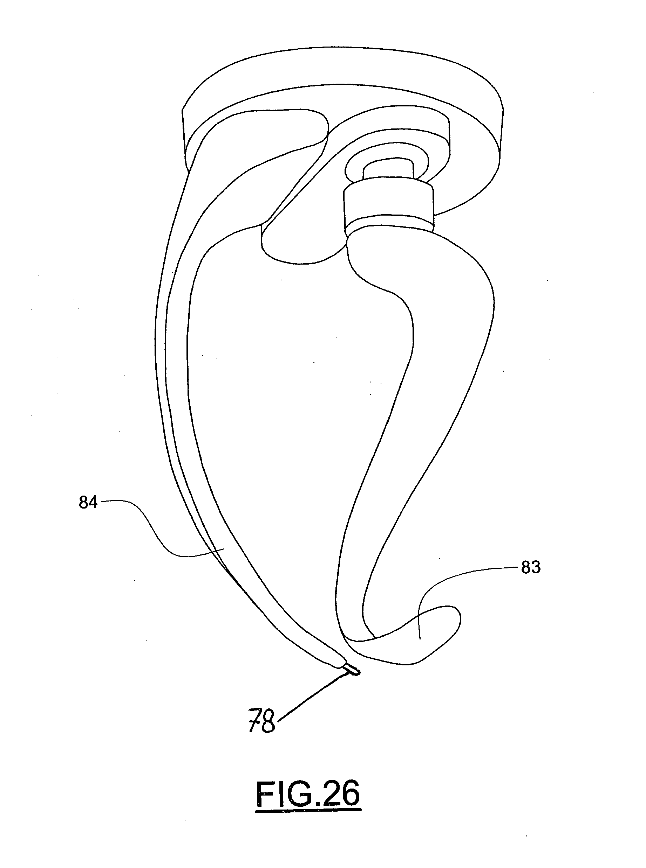

La figure 25 montre, notamment pour un pétrin robot de type planétaire, un outil de travail sous forme d'un bras spirale 83 et un contre-outil 84 avec sa sonde 78 de formes évolutives ainsi qu'un racloir contre-outil 85. Cette forme d'outil de travail, montrée à cette figure de même qu'aux figures 26 à 28 et 34, illustre un second mode de réalisation d'un outil de travail conformément à la présente invention.

La figure 26 montre, notamment pour un pétrin robot de type planétaire avec un bras spirale 83 travaillant en synergie uniquement avec un contre-outil 84 sans racloir, ce contre-outil 84 portant à son extrémité une sonde thermométrique 78.

Avantageusement, ce bras spirale 83 peut être conçu pour être, côté entraînement, d'un profil très aplati presque horizontal en axe vertical et presque vertical en axe horizontal. Ensuite, le bras 83 présente une branche avec une forme spirale très prononcée et à nouveau plus accentuée en extrémité. Cette extrémité remonte légèrement vers le centre de la cuve avec une forme aplatie en cuillère. De plus, sur toute la branche, le profil extérieur, pour assurer un bon laminage, est bombé avec un jeu réduit avec la paroi intérieure de la cuve et un jeu encore plus réduit avec le fond de la cuve.

Le profil intérieur du bras 83 est presque plat pour favoriser l'aération des ingrédients, par exemple sous forme d'une pâte, et limiter les contraintes au bras 83 en rotation avec une section aplatie plus importante du côté de l'arbre d'entraînement et se rétrécissant progressivement avec une section plus large qu'épaisse et rayonnée à chaque extrémité du profil pour assumer avec efficience et résistance des opération de mélange ou de pétrissage sans rupture des fibres afin de favoriser l'étirage.

Avantageusement, il en va de même pour la forme du contre-outil 84 favorisant en synergie avec tous les outils interchangeables la création de flux avec un jeu réduit lors du passage de la branche du bras 83. Ce contre-outil 84 présente une section très aplatie et un profil intérieur presque plat, voire légèrement incurvé et légèrement bombé en extérieur et plongeant en section dégressive pour terminer pratiquement en pointe. Cette pointe permet de pénétrer le mélange sous forme de pâte par scarification et favorise le guidage du flux de pâte avec moins de contrainte.

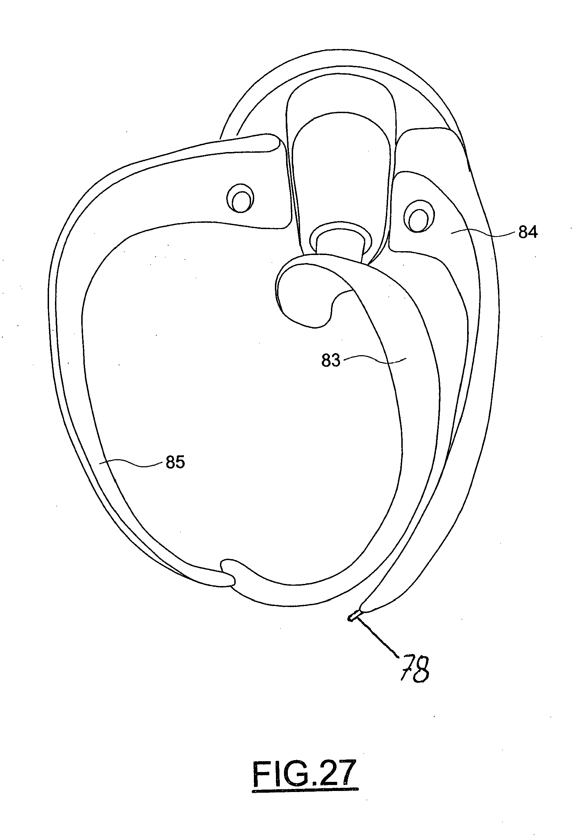

La figure 27 montre, notamment pour un pétrin robot de type planétaire, les trois outils 83 à 85 déjà cités pour la figure 25, ces outils 83 à 85 étant dans une autre disposition rotative. Comme précédemment mentionné, le contre-outil 84 porte une sonde thermométrique 78.

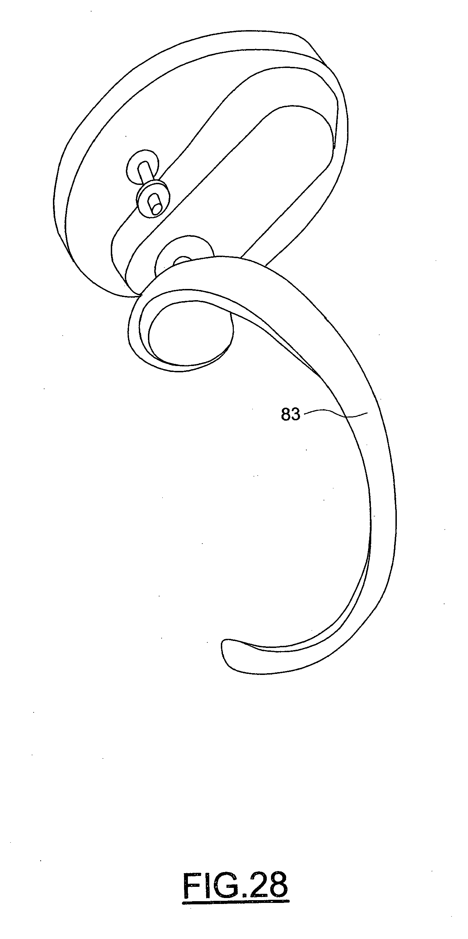

La figure 28 montre, notamment pour un pétrin robot de type planétaire, un unique bras spirale 83 similaire à ceux des figures 25 à 27.

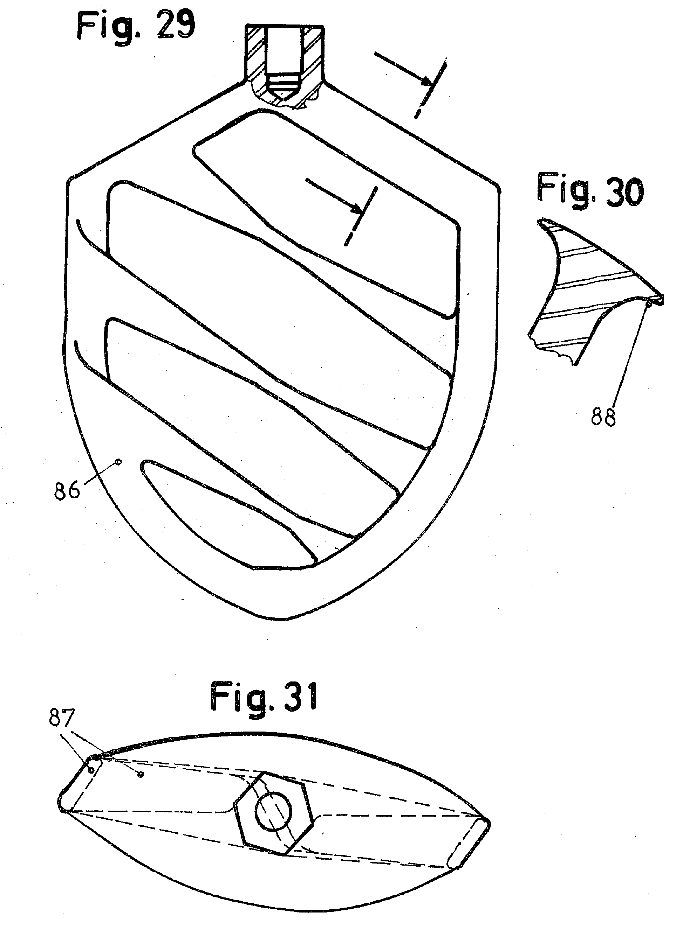

Les figures 29, 30 et 31 montrent pour des pétrins robots de type planétaire, spirale et oblique un nouvel outil palette 86 bénéficiant de nouvelles formes de branches à profil incliné. Une forme oblongue supérieure anti-projections 88 est prévue pour rabattre les éventuelles projections.

L'outil palette 86, avantageusement pour le traitement des crèmes, présente une disposition inclinée de ses branches intérieures par rapport au profil de la branche/ceinture extérieure épousant, d'une part, la paroi intérieure de la cuve et, d'autre part, le cas échéant, l'intérieur du contre-outil en présentant un profil battant de ceinture plus large et plus solide grâce à son inclinaison.

L'outil palette 86 est, de préférence, doté d'un revêtement quasi-cristaux anti-adhérents, poli-miroir pour faciliter les nettoyages. Il peut aussi être en céramique, silicone, PTFE ou polyuréthane.

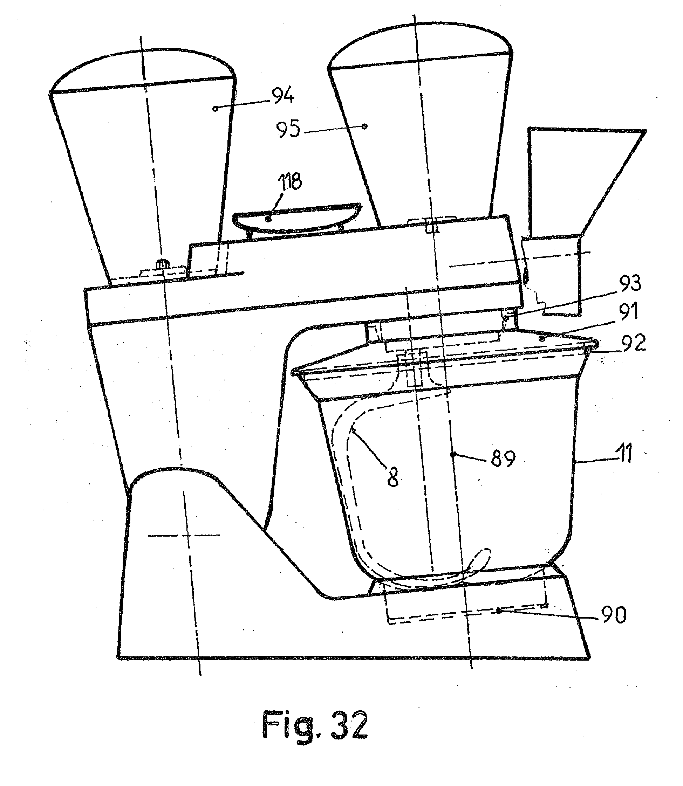

La figure 32 montre un pétrin robot évolutif de type planétaire doté d'un axe 89 de cuve 11 légèrement incliné par rapport à la verticale. Le pétrin comprend aussi un système de chauffe 90 en plaque mince disposé sous la cuve 11, un couvercle 91 de sécurité et de visualisation, ce couvercle 91 étant doté de joints anti-vibration 92 et 93 dont au moins un est tronconique. Le couvercle 91 peut être équipé d'un système extracteur de jus avec bocal de réception 95 du jus sur l'arbre lent du plateau planétaire pouvant présenter comme axe de symétrie l'axe 89 de cuve, en plus ou en remplacement d'un binder 94. A titre indicatif, les vitesses de rotation pour l'extraction de jus peuvent être de 50 à 150 tours/mn.

L'outil de travail est sous forme d'un bras 8. Une portion médiane du bras 8 recouvre une partie de la paroi latérale de la cuve 11 et une portion vers l'extrémité du bras 8 recouvre le fond de cette cuve, à l'exception de l'extrémité proprement dite du bras 8 qui est recourbée vers l'intérieur de la cuve 11.

Le couvercle 91 de sécurité peut être transparent et en matière plastique de qualité alimentaire ou en verre, par exemple en borosilicate. Le verre en borosilicate peut avantageusement être doté de résistances sérigraphiées en couches épaisses de l'ordre de 50 à 150µ.

De plus, un système de pesage 118 d'ingrédients, précis et sensible, pouvant fonctionner sans tare, peut être prévu en étant intégré à la partie supérieure du bâti du pétrin dont l'extrémité libre est disposée au dessus du couvercle 91.

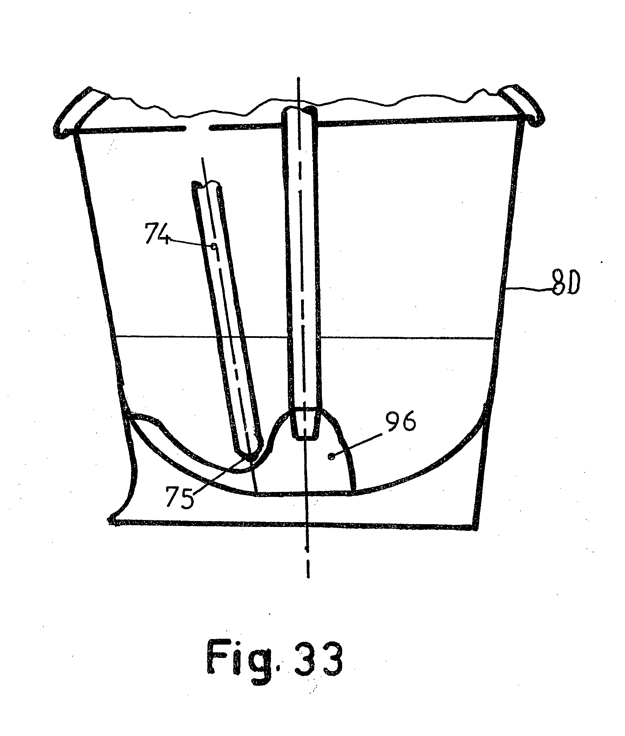

La figure 33 montre, dans un pétrin cuiseur de type marmite minute ou éventuellement machine à pain, un outil de travail 96, de forme similaire à celui du premier mode de réalisation de l'outil de travail montré pour les figures 21 et 23. Cet outil de travail 96 peut servir de racloir et/ou de brassage et épouse le fond chauffé de la cuve 80. L'outil 96, travaillant ainsi sans incorporation d'air, peut coopérer avec un contre-outil 74 portant la sonde thermométrique 75.

L'outil de travail 96 tourne avantageusement lentement en fond de cuve sous le contre-outil 74 portant la sonde 75 et assume le brassage des ingrédients sans incorporation d'air tout en évitant les croûtages sur le fond chauffé. Il comprend, de préférence, une lame racleuse en silicone souple de qualité alimentaire moulée sur un insert.

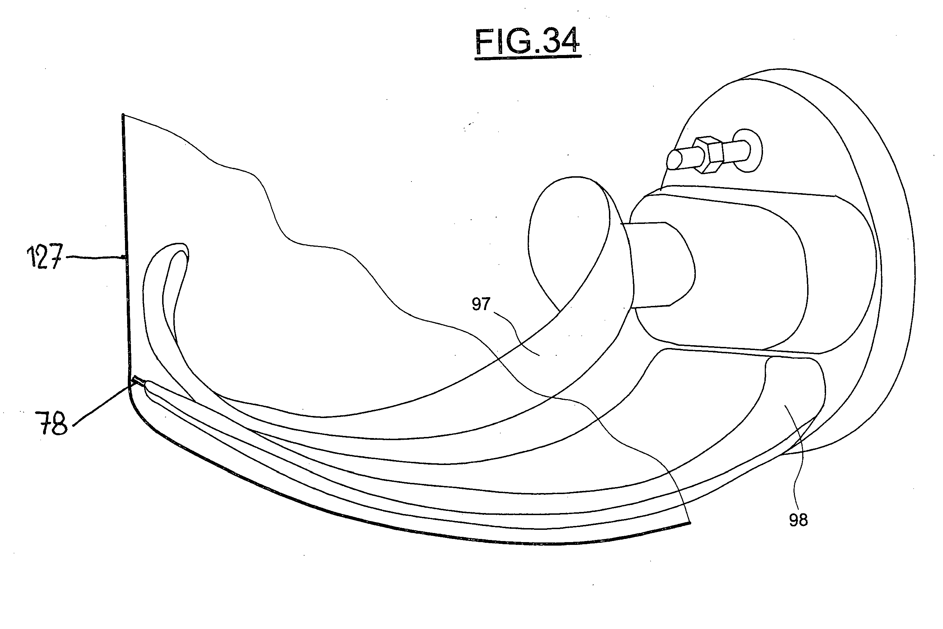

La figure 34 montre, pour un pétrin robot horizontal planétaire, de préférence à mouvements corotatifs, notamment dans un rapport de vitesse de l'ordre de 1/10, ou éventuellement à mouvements contre rotatifs, un bras spirale 97 conforme à la seconde forme de réalisation de l'outil de travail et déjà montré aux figures 25 à 28.

Ce bras spirale 97, en tant qu'outil de travail, coopère avec un contre-bras 98 à mouvement planétaire horizontal en tant que contre-outil, ce contre-outil pouvant être doté d'une sonde thermométrique 78 ou sans fil.

Ceci peut être applicable particulièrement sur les pétrins fermenteurs réacteurs de type horizontal avec l'ensemble animé d'un mouvement planétaire et doté d'outil 97 et de contre-outil 98 en mouvement corotatif ou contra-rotatif disposé sur un axe quasi-horizontal traversant l'une des parois verticales de la cuve horizontale. Cet ensemble peut effectuer des pétrissages lents avec une importante incorporation d'air en micro-bulles dans la masse pâteuse, ce qui permet d'obtenir une nouvelle qualité de pâte traitée. La cuve 127 peut bénéficier d'un fond légèrement bombé pour le travail de petites quantités avec la possibilité d'implantation de diverses sondes.

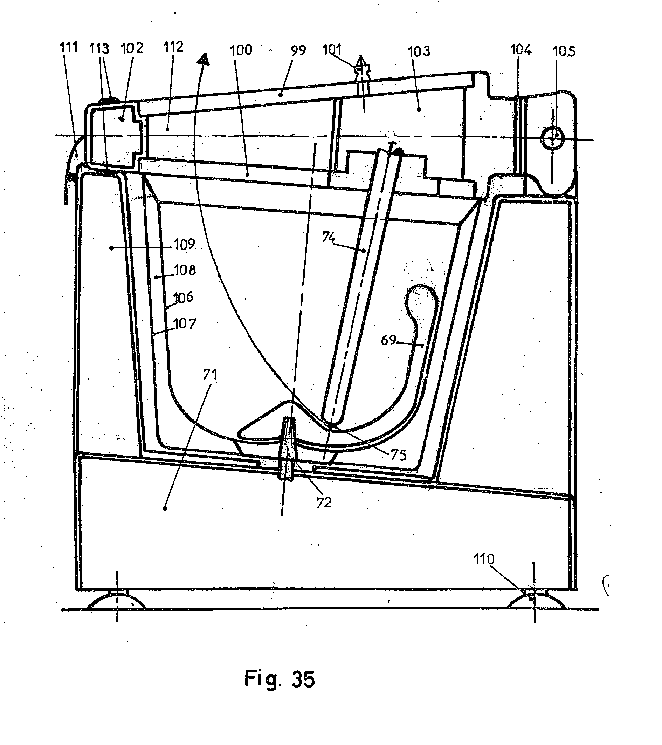

La figure 35 montre un pétrin cuiseur du type machine à pain à boule ou classique, doté d'un ensemble couvercle 102 relevable par basculement autour d'un pivot 105 s'étendant sensiblement horizontalement. L'ensemble couvercle 102 peut ainsi être retourné à 180°.

Cet ensemble couvercle 102 est conçu, d'un côté, pour travailler en frasage, autolyse, pétrissage, fermentations successives avec rafraîchis et apprêt avec un contre-outil 74 portant une sonde thermométrique 75 ou non, ce contre-outil 74 ayant de préférence un profil 18 tel que représenté en figure 8. Ce contre-outil 74 est fixé à la partie inférieure de l'ensemble couvercle 102 faisant face à l'ouverture supérieure de la cuve 106.

Un système de blocage 111 de l'ensemble couvercle 102 est prévu ainsi qu'une empreinte de maintien latéral 113 des deux côtés longitudinaux dudit ensemble couvercle 102. Le contre-outil 74 est prévu pour travailler en synergie avec le bras rotatif 69, formant l'outil de travail et la paroi intérieure de la cuve 106.

En position retournée, l'ensemble couvercle 102 est conçu pour cuire la pâte apprêtée, en étant muni, sur sa surface alors en regard de l'ouverture de la cuve 106, par exemple d'un verre transparent 99 en borosilicate doté de résistances chauffantes linéaires en couches sérigraphiées directement sur le verre. Sur le même côté de l'ensemble couvercle 102, une buse 101 à buée peut être prévue en étant reliée à un réservoir d'eau 103 avantageusement intégré dans l'ensemble couvercle 102.

Une interruption du courant de chauffage par ces éléments est avantageusement déclenchée quand le couvercle 102 est soulevé de la cuve 106.

Sur son côté opposé à celui portant le verre transparent 99, l'ensemble couvercle 102 est revêtu d'un second verre 100 en borosilicate. Un réservoir d'air isolant 112 peut être introduit au moins partiellement entre les deux verres 99 et 100.

Avantageusement, la cuve 106 peut être en doubles parois minces 106 et 107 en acier inoxydable, comme montré à la figure 35, la paroi intérieure 106 pouvant être dotée sur son extérieur de résistances linéaires chauffantes sérigraphiées et/ou d'air isolant 108. En alternative, la cuve 106 peut être conçue avec une simple peau. La cuve 106 peut aussi être prévue pour être placée dans une enceinte chauffante ou non, ce dernier mode de réalisation étant montré à la figure 35.

La paroi peut aussi être en verre borosilicate ou une autre matière remplie d'argile zéolite et eau, avec un revêtement TCO (oxyde/conducteur/transparent) et/ou un oxyde d'étain doté fluor. Il est possible ainsi d'assurer le refroidissement de la cuve et des ingrédients par un système absorption-désorption zéolite.

L'entraînement du bras rotatif 69 est assuré par une extrémité d'un arbre cannelé 72 traversant le fond de cuve 106 en s'étendant de la partie inférieure 71 du bâti formant socle vers la partie inférieure d'une extrémité du bras rotatif 69. Une transmission compacte est intégrée dans la partie inférieure formant socle 71 du bâti 71. Ce socle 71 est avantageusement doté de pieds ventouses 110 pour le maintien en position du pétrin.

Dans le cas d'une cuve simple enveloppe dotée sur son côté extérieur de résistances linéaires sérigraphiées en couches épaisses, avantageusement chaque couche peut être équipée en sa périphérie extérieure d'un fourreau étanche en matériau isolant épais et étanche pour passages fréquents en lave-vaisselle. Dans ce cas de figure, l'enceinte bâti support couvercle peut alors être plus compacte sans être chauffante.

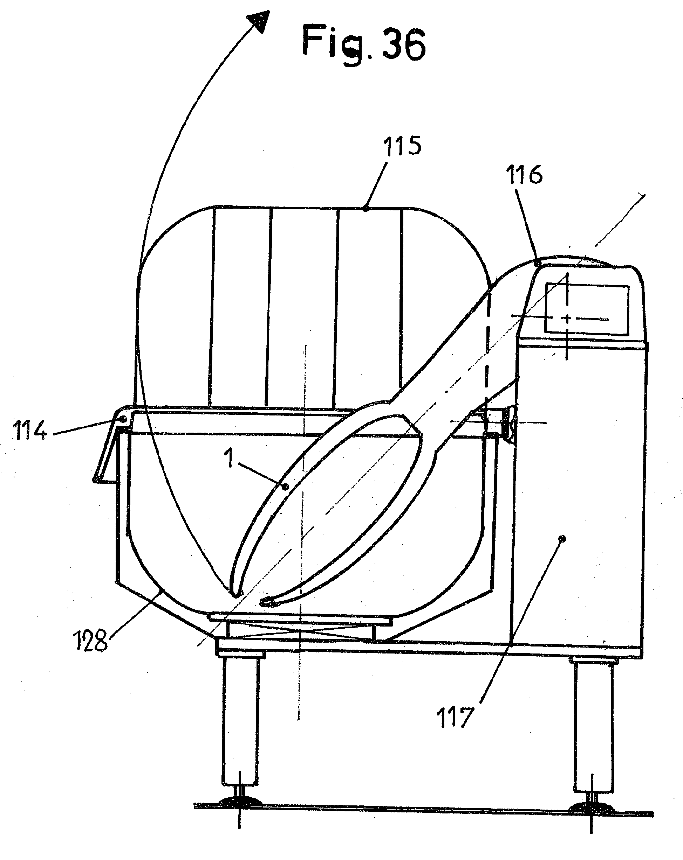

La figure 36 montre un pétrin robot discontinu, comme par exemple de type oblique, qui présente un bras 1 de pétrissage basculable et son entraînement 116 relié à une colonne formant bâti 117, ledit bras étant contenu dans la cuve 128 du pétrin. Un couvercle 114 technique et retournable est prévu, d'une part, pour assurer la sécurité des mains de l'utilisateur en phase de pétrissage et, d'autre part, le couvercle étant retourné sur son autre face, pour accueillir en sécurité, par l'intermédiaire d'un outil pré-diviseur 115, les pré-pâtes pré-pesées par pesage volumétrique correspondant à des pré-masses dosées convenant aux différentes diviseuses hydrauliques du marché de la panification.

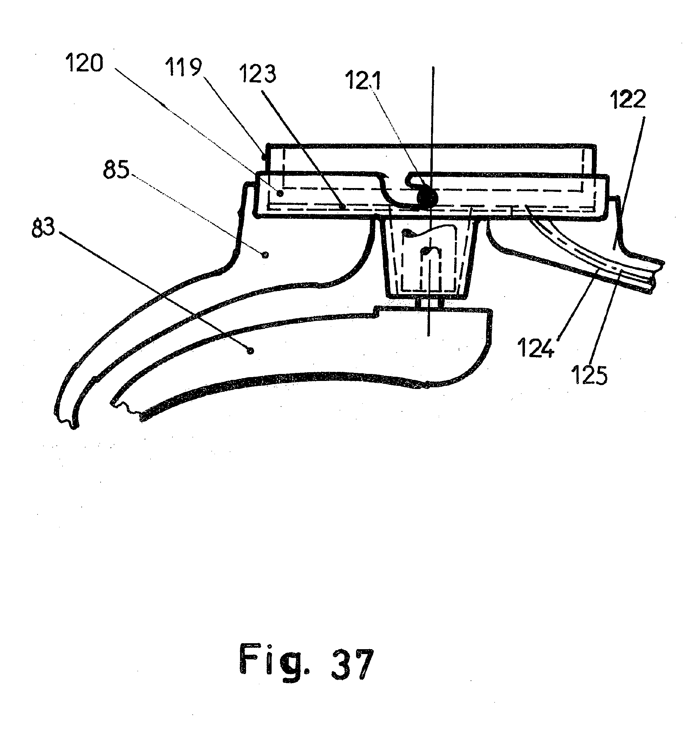

La figure 37 montre un exemple d'un pétrin robot de type planétaire permettant un montage et démontage aisés de l'outil racloir 85 et du contre-outil 122. Ceci est avantageusement obtenu par des plots 121, avantageusement au nombre de 2 ou 3, ces plots 121 s'encastrant dans un plateau 120 solidaire du racloir 85, ledit plateau 120 s'encastrant lui-même sur le plateau 119 du planétaire portant l'outil de travail 83 interchangeable, ceci à proximité du passage de la branche dudit outil 83.

Avantageusement, pour une meilleure tenue et afin d'absorber les vibrations inhérentes au raclage, de préférence, le plateau 120 peut intégrer, par moulage ou non, un élastomère souple 123 pour une bonne mise en pression des plots 121.

Le plateau 120, présentant l'outil satellite sous la forme du racloir 85, est doté par ailleurs avantageusement d'un contre-outil 122. Ce contre-outil 122 peut être intégré dans la fonderie d'un tube léger en acier 124 inoxydable formant un porte-sonde thermométrique présentant un fil souple 125, mais ce n'est pas obligatoire.

Avantageusement, le plateau 120 portant le racloir 85 est vissé, étant donné qu'il est susceptible d'être exposé à une forte usure. Celui-ci peut former avec le contre-outil 122 une seule et même pièce de fonderie usinée polie et revêtue, par exemple, d'un revêtement anti-usure, anti-adhérent et de qualité alimentaire telle que quasi-cristaux ou céramique ou hydroxyle apatite ou PTFE.

Inversement, le racloir 85 et le contre-outil 122 peuvent aussi être des pièces indépendantes fixées sous le plateau 120 par visserie et collage selon les fabrications envisagées. De plus, il apparaît intéressant que l'intérieur du plateau 120, portant le racloir 85 et le contre-outil 122, bénéficie d'un surmoulage en un matériau élastomère souple anti-vibration et permettant une mise en pression de l'ensemble sur les plots d'accrochage 121.

La présente invention permet, avec la combinaison d'une sonde thermométrique associée à l'une de deux formes spécifiques de l'outil de travail, d'obtenir une synergie des effets de ces deux éléments conduisant à des résultats supérieurs notamment en pétrissage, fermentations et cuissons, ceci pour une large gamme de dispositifs culinaires. Elle peut, par exemple, concerner dans le domaine de la fabrication du pain les pétrins cuiseurs de type machine à pain classique à boule et à pain allongé, les pétrins fermenteurs robots et préparateurs culinaires de type planétaire, spirale, oblique, vertical, horizontal à bras et contre-bras ou horizontal à mouvement planétaire et à deux bras plongeant articulés.

L'invention n'est nullement limitée aux modes de réalisation décrits et illustrés qui n'ont été donnés qu'à titre d'exemples.

## Revendications

1. Dispositif de préparation culinaire, notamment pour la préparation d'une pâte à base de farine, comprenant un bâti (B) supportant un récipient de mélange dit cuve (2,11,20,46,52,60,68,80,106,127-130) comprenant une ouverture par laquelle peuvent être introduits des ingrédients, un premier outil de travail (1,5,8,17,31,69,83,97), des moyens d'entraînement en rotation dudit premier outil de travail (1,5,8,17,31,69,83,97) par rapport à la cuve (2,11,20,46,52,60,68,80,106,127-130) et/ou des moyens d'entraînement en rotation de la cuve (2,11,20,46,52,60,68,80,106,127-130), ledit premier outil de travail (1,5,8,17,31,69,83,97) comprenant une partie active venant au contact des ingrédients à mélanger dans la cuve (2,11,20,46,52,60,68,80,106,127-130), au moins une sonde (4,7,14,19,30,75,78) thermométrique étant placée à l'intérieur de la cuve (2,11,20,46,52,60,68,80,106,127-130),
**caractérisé en ce que** le premier outil de travail (1,5,8,17,31,69,83,97) est conçu
sous la forme d'un bras (83) étant, du côté des moyens d'entraînement, d'un profil aplati, ce profil étant prolongé par une branche avec une forme spirale plus prononcée au départ qu'en partie médiane, cette forme spirale s'accentuant de la partie médiane jusqu'à l'extrémité libre du bras (83), ladite extrémité remontant avec une forme aplatie en cuillère OU
sous la forme d'un bras (17,69), une majeure partie de la surface du bras (17,69) tournée vers l'extérieur de la cuve. (68,80,106) faisant alors face à une partie de la paroi de la cuve (68,80,106) et une partie du fond de la cuve (68,80,106) en étant appliquée contre elles, ledit bras (17,69) s' étendant en forme de S et que l'extrémité libre du bras (69) est décalée de ladite paroi et légèrement recourbée vers l'intérieur de la cuve (80) en suivant le profil formé par les ingrédients pâteux dans la cuve (80),
le dispositif comportant également un second outil de travail dit contre-outil (3,6,18,29,50,74,84,98,122), ledit contre-outil (3,6,18,29,50,74,84,98,122) présentant une partie active venant au contact des ingrédients à mélanger, la partie active dudit contre-outil (3,6,18,29,50,74,84,98,122) se trouvant au moins par intermittence à proximité de la partie active du premier outil de travail (1,5,8,17,31,69,83,97) de manière à ce que le contre-outil (3,6,18,29,50,74,84,98,122) et le premier outil de travail (1,5,8,17,31,69,83,97) interagissent sur les ingrédients à mélanger dans la cuve (2,11,20,46,52,60,68,80,106,127-130),
qu'il est utilisé en complément du premier outil de travail (1,5,8,17,31,69,83,97) un ou des outils auxiliaires (10, 85, 126) du type outils racloirs (10,85, 126), ces outils (10, 85, 126) étant montés sur le dispositif par des moyens d'attache rapide du type clips ou équivalents techniques, au moins un outil auxiliaire pouvant aussi servir de contre-outil principal ou auxiliaire quand non utilisé à la place du premier outil de travail (1, 5, 8, 17, 31, 69, 83, 97),
un outil racloir (10,85,126) étant relié au premier outil de travail (1,5,8,17,31,69,83,97) qui tourne lentement en fond de cuve (2,11,20,46,52,60,68,80,106,127-130) ou à un plateau planétaire afin d'effectuer le mélange des ingrédients, éventuellement sans incorporation d'air à vitesse lente, tout en évitant les croûtages sur le fond de la cuve (2,11,20,46,52,60,68,80,106,127-130), l'outil racloir (10, 85, 126) présentant une lame racleuse.

2. Dispositif selon la revendication 1, **caractérisé en ce que** le contre-outil (3,6,18,29,50,74,84,98,122) comporte une partie inférieure possédant une forme épousant la forme de la trajectoire balayée par la partie inférieure du premier outil de travail (1,5,8,17,31,69,83,97) et se terminant avantageusement par une pointe pouvant s'écarter de ladite trajectoire du premier outil de travail (1,5,8,17,31,69,83,97).

3. Dispositif selon la revendication précédente, **caractérisé en ce que** ledit contre-outil (3,6,18,29,50,74,84,98,122) est sous la forme d'un bras (84) présentant une section plane avec un profil intérieur plat ou légèrement incurvé et un profil extérieur légèrement bombé.

4. Dispositif selon l'une quelconque des revendications 1 à 3, **caractérisé en ce que** le premier outil de travail (83,97) est entraîné par un élément dans un mouvement de rotation composé de type planétaire cycloïde ou elliptique, ledit outil de travail (83,97) tournant, d'une part, sur lui- même autour de son axe de rotation et, d'autre part, en même temps que l'élément lui-même autour de l'axe de rotation dudit élément, l'axe de rotation de l'élément n'étant pas confondu avec l'axe de rotation du premier outil de travail (83,97), l'outil de travail (83,97) pénétrant dans la cuve (2,11,20,46,52,60,68,80,106,127-130) par son ouverture ou une de ses parois.

5. Dispositif selon la revendication 4, **caractérisé en ce que** le contre-outil (10, 84, 85, 98,122) est aussi entraîné dans un mouvement de rotation composé de type planétaire cycloïde ou elliptique, à mouvements corotatifs ou contra-rotatifs dans un rapport de vitesse préférentielle de 1/10 par rapport à l'outil de travail (83,97) interchangeable animé d'une vitesse variable.

6. Dispositif selon la revendication 1, **CARACTÉRISÉ PAR LE FAIT QU'**il comprend un ensemble d'outils d'un pétrin horizontal planétaire muni d'un bras spirale et d'un contre-bras de formes préférentielles, et d'une paroi intérieure de cuve épousée par le profil du bras et du racloir en extérieur.

7. Dispositif selon la revendication 1, **CARACTÉRISÉ PAR LE FAIT QUE** fond de la cuve est à couronne de forme semi elliptique à environ 55[deg.] et/ou avec pour une cuve de cinq litres, un diamètre d'environ 230 mm et une profondeur de 180 mm avec une grande longueur d'axe d'ellipse de 120 mm, et/ou Cette cuve étant évasée en partie supérieure pour une meilleure visualisation de son intérieur et/ou faciliter son accès à partir de 1' extérieur.

8. Dispositif selon la revendication 1, **caractérisé en ce que** le second contre-outil (3,6,18,29,50,74,84,98,122) porte la sonde (4,7,14,19,30,75,78) thermométrique sur sa partie active, cette sonde (4,7,14,19,30,75,78) pouvant être sans fil et télé-alimentée par induction d'une bobine quand le second contre-outil (3,6,18,29,50,74,84,98,122) est entraîné en rotation, ou avec fil quand le second contre-outil (3,6,18,29,50,74,84,98,122) est non rotatif lorsque la cuve est elle-même tournante (2,46,52,60,128,129,130).

9. Dispositif selon la revendication 1, **CARACTÉRISÉ PAR LE FAIT QU'**il est un pétrin de type oblique, de type spirale ou batteur mélangeur de type planétaire.

10. Dispositif selon l'une quelconque des revendications 1 à 9, **caractérisé en ce que** les parois latérales et le fond de la cuve (2,46,52,60,128,129,130) sont entourés d'une enceinte thermique non tournante (36,49,61) pouvant intégrer des éléments chauffants.

11. Dispositif selon l'une quelconque des revendications 1 à 9, **caractérisé en ce que** l'ouverture de la cuve (2,11,20,46,52,60,68,80,106,127-130) se situe dans la partie supérieure de celle-ci et est revêtue d'un couvercle (38,56,65,73,91) comprenant un matériau isolant pouvant être transparent et en matière plastique de qualité alimentaire ou en verre borosilicate ou comprenant des éléments chauffants.

12. Dispositif selon les revendications 10 ou 11, **caractérisé en ce que** les éléments chauffants sont des couches de résistances sérigraphiées directement sur le couvercle (38,56,65,73,91) ou la cuve (2,11,20,46,52,60,68,80,106,127-130), une interruption du chauffage par ces éléments étant déclenchée quand le couvercle (38,56,65,73,91) est soulevé de la cuve (2,11,20,46,52,60,68,80,106,127-130).

13. Dispositif selon la revendication 1, **CARACTÉRISÉ EN CE QUE** dans le cas d'une cuve tournante (2,46,52,60,128,129) l'outil racloir (10) est fixé sous le couvercle.

14. Dispositif selon la revendication 1, **caractérisé par le fait que** Le racloir/contre-outil présente une lame racleuse (10) de forme particulière et moulée sur insert pour racler la paroi de la cuve (11), cet insert étant en fonderie d'aluminium, en fonte ou en inox recouvert d'un moulage, par exemple, en polyuréthane 90/95 Schorres de qualité alimentaire ou dans d'autres matériaux équivalents antiabrasion tels que silicone.

15. Procédé de régulation d'un dispositif culinaire selon l'une quelconque des revendications 1 à 14, ce dispositif présentant une unité de commande centrale des paramètres de fonctionnement du dispositif ainsi qu'une cuve (2,11,20,46,52,60,68,80,106,127-130) recevant les ingrédients, au moins une sonde (4,7,14,19,30,75,78) thermométrique étant placée à l'intérieur de la cuve (2,11,20,46,52,60,68,80,106,127-130), **caractérisé en ce qu'**au moins un paramètre de fonctionnement du dispositif est régulé en fonction de la température mesurée par la sonde (4,7,14,19,30,75,78) thermométrique.

## Patentansprüche

1. Lebensmittelzubereitungsvorrichtung, insbesondere für die Herstellung von Brotteig aus Mehl, umfassend einen Rahmen (B), der einen Mischbehälter trägt, bezeichnet als Schüssel (2,11,20,46,52,60,68,80,106,127-130), die eine Öffnung, durch die Bestandteile eingebracht werden können, ein erstes Arbeitswerkzeug (1,5,8,17,31,69,83,97), Antriebsmittel zum Drehen des ersten Werkzeuges (1,5,8,17,31,69,83,97) relativ zu der Schüssel (2,11,20,46,52,60,68,80,106,127-130) und/oder die Antriebseinrichtung zum Drehen der Schüssel (2,11,20,46,52,60,68,80,106,127-130), wobei das erstgenannte Arbeitswerkzeug (1,5,8,17,31,69,83,97) eine aktive Rolle im Kontakt mit den in der Schüssel (2,11,20,46,52,60,68,80,106,127-130) gemischten Zutaten spielt, mindestens einen Temperatursensor (4,7,14,19,30,75,78) im Inneren der Schüssel (2,11,20,46,52,60,68,80,106,127-130) angeordnet,
**dadurch gekennzeichnet, dass** das erste Arbeitswerkzeug (1,5,8,17,31,69,83,97) in Form eines Armes (83) an der Seite der Antriebseinrichtung platziert, die ein sehr flaches aerodynamisches Profil hat, nämlich das Profil eines Zweiges mit einer stärkeren Spiralform am Beginn des Arms (83) als im mittleren Teil, wobei die Spiral form vom Mittelteil, bis zum freien Ende des Arms (83) verstärkt wird und am Ende in eine abgeflachen Form eines Löffel übergeht oder
in Form eines Armes (17,69), wobei ein großer Teil der Oberfläche des Armes (17,69) sich an der Außenseite der Schüssen (68,80,106) befindet, also sich zu einem Teil der Wand der Schüssel (68,80,106) und zu einem Teil des Bodens der Schüssel (68,80,106) ausrichtet, sich also in ihrer Nähe der Wand und des Bodens bewegt, wobei der genannte Arm (17,69) die Form eines S hat und das freie Ende des Arms(69) sich entlang der genannten Schüsselwand leicht zum Schüsselinneren (80) hin auf einer Kurve bewegt nach dem vom Teig in der Schüssel ausgebildetem Profil (80), zusätzlich
die Vorrichtung mit einem zweiten Arbeitswerkzeug, bezeichnet als Gegenwerkzeug (3,6,18,29,50,74,84,98,122), wobei dieses Gegenwerkzeug (3,6,18,29,50,74,84,98,122) einen aktiven Teil hat, der im Kontakt mit den zu knetenden Zutaten kommt, wobei der dabei aktive Teil des genannten Gegenwerkzeuges (3,6,18,29,50,74,84,98,122) zumindest zeitweise in der Nähe des aktiven Teils des erste Arbeitswerkzeug (1,5,8,17,31,69,83,97) kommt, sodass das Gegenwerkzeug (3,6,18,29,50,74,84,98,122) und das erste Arbeitswerkzeug (1,5,8,17,31,69,83,97) zusammen auf die zu knetenden Zutaten in der Schlüssel (2,11,20,46,52,60,68,80,106,127-130) wirken,
dass zusätzlich zu dem ersten Arbeitswerkzeug (1,5,8,17,31,69,83,97) ein oder mehrere Hilfswerkzeuge (10,85,126) der Bauart Schaberwerkzeuge (10,85,126) verwendet werden, wobei diese Werkzeuge (10,85,126), die auf der Vorrichtung durch Einrichtungen schnell zu befestigen sind wie durch Klemmen oder vergleichbare Techniken, sodass mindestens ein Hillswerkzeug auch als Haupt- oder Hilfsgegenwerkzeug verwendet werden kann, wenn es nicht anstelle des ersten Arbeitswerkzeug (1,5,8,17,31,69,83,97) verwendet wird,
ein Schaberwerkzeug (10,85,126) verbunden mit dem ersten Arbeitswerkzeug (1,5,8,17,31,69,83,97), das sich langsam am Boden der Schlüssel (2,11,20,46,52,60,68,80,106,127-130) dreht oder verbunden mit einem Planetengetriebe, um die Mischung der Zutaten herzustellen, möglichst ohne langsam Lufteinmischung zur Vermeidung von Krustenbildung am Boden der Schüssel (2,11,20,46,52,60,68,80,106,127-130), wobei das Schaberwerkzeug (10,85,126) aus einem Schälmesser besteht.

2. Vorrichtung nach Anspruch 1, **dadurch gekennzeichnet, dass** das Gegenwerkzeug (3,6,18,29,50,74,84,98,122) einen unteren Teil mit einer Form hat, nach der genauen Form der Trajektorie durch den unteren gefegten Teil des ersten Arbeit-werkzeuges (1,5,8,17,31,69,83,97) und vorzugsweise besagte Form mit einer Spitze endend, die von der besagten Trajektorie des ersten Arbeitswerkzeug (1,5,8,17,31,69,83,97) abweichen kann.

3. Vorrichtung nach dem vorhergehenden Anspruch, **dadurch gekennzeichnet, dass** das Gegenwerkzeug (3,6,18,29,50,74,84,98,122) in der Form eines Arms (84) mit einem ebenen Teil mit einem ebenen oder leicht nach Außen gewölbten Innenprofil oder einem leicht nach Außen gewölbten Außenprofil.

4. Vorrichtung nach einem der vorhergehenden Ansprüche 1 bis 3, **dadurch gekennzeichnet, dass** das erste Arbeitswerkzeug (83,97) durch ein Einrichtung zu einer zusammengesetzte Drehbewegung aus Planetenbewegung, Zykloide oder elliptischen Typs angetrieben wird, wobei das erste Arbeitswerkzeug (83,97) einerseits sich selbst, um seine Drehachse dreht und andererseits mit der Einrichtung selbst um die Drehachse der genannten Einrichtung dreht, wobei die genannte zweite Drehachse nicht mit der Drehachse des ersten Arbeitswerkzeuges (83,97) zu verwechseln ist, des Arbeitswerkzeuges (83,97), das von oben oder seitwärts durch eine Öffnung in der Wand in die Schüssel (2,11,20,46,52,60,68,80,10b,127-130) eingebracht wird.

5. Vorrichtung nach Anspruch 4, **dadurch gekennzeichnet, dass** das Gegenwerkzeug (10,84,85,98,122) sich auch in einer zusammengesetzte Drehbewegung aus Planetenbewegung, Zykloide oder elliptischen Typs angetrieben wird, die in der gleichen Richtung oder in umgekehrter Richtung dreht, vorzugsweise im Geschwindigkeitsverhältnis 1/10 im Vergleich zu dem austauschbaren Arbeitswerkzeug (83,97), bewegt mit einer variablen Geschwindigkeit.

6. Vorrichtung nach Anspruch 1, **gekennzeichnet durch** die Tatsache, dass verschiedenen Werkzeuge einer Kneteinrichtung mit horizontaler Planetenbewegung, enthalten sind, die alle mit einem spiralförmigen Arm und einem Gegenarm in bevorzugten Formen ausgestattet sind und mit einer Innenwand der Schüssel, wobei das Profil des Arms und des Schabers der besagten Innenwand folgen, wobei besagter Schaber auf der Außenseite dem besagten Arm folgt.

7. Vorrichtung nach Anspruch 1, **gekennzeichnet durch** die Tatsache, dass der Boden der Schüssel eine Krone ist mit einer halbelliptischer Form von etwa 55 Grad und/oder für eine Fünf-Liter-Schüssel mit etwa 230 mm Durchmesser und eine Tiefe von 180 mm, wobei die große Ellipsenachse eine Länge von 120 mm aufweist, und/oder besagte Schüssel im oberen Teil für einen besseren Einblick auf die Innenseite und/oder zum Zwecke eines erleichterten Zugriffes von außen eine gespreizte Öffnung aufweist.

8. Vorrichtung nach Anspruch 1, **dadurch gekennzeichnet**, das das zweite Gegenwerkzeug (3,6,18,29,50,74,84,98,122) die Thermosonde (4,7,14,19,30,75,78) auf seinem aktiven Teil eingebaut hat, und zwar besagte Sonde (4,7,14,19,30,75,78) drahtlos und versorgt durch eine Induktionsspule, während das zweige Gegenwerkzeug (3,6,18,29,50,74,84,98,122) in Drehung versetzt wird, oder mit Drahtverbindung, wenn das zweite Gegenwerkzeug (3,6,18,29,50,74,84,98,122) sich nicht dreht, aber die Schüssel (2,46,52,60,128,129,130) sich dreht.

9. Vorrichtung nach Anspruch 1, **gekennzeichnet durch** die Tatsache, dass es sich um eine Kneteinrichtung vom Typ mit geneigter Drehachse, Spiral oder Planetenbewegung.

10. Vorrichtung nach einem der vorhergehenden Ansprüche 1 bis 9, **dadurch gekennzeichnet, dass** die Seitenwände und der Boden der Schüssel (2,46,52,60,128,129,130) in ein isolierendes Gehäuse (36,49,61), das sich nicht mitdreht, gebettet sind, das mit einige Heizelemente ausgestattet werden kann.

11. Vorrichtung nach einem der vorhergehenden Ansprüche 1 bis 9, **dadurch gekennzeichnet, dass** die Öffnung der Schüssel (2,11,20,46,52,60,68,80,106,127-130) sich im oberen Teil befindet mit einem Deckel (38,56,65,73,91) aus thermisch-isolierendem Material, möglicherweise transparent und aus lebensmittelechtem Kunststoff der aus hitzebeständigem Glas oder auch ausgestattet mit Heizelementen.

12. Vorrichtung nach den Ansprüchen 10 oder 11, **dadurch gekennzeichnet, dass** die Heizelemente Widerstände ausgebildet als Siebdruckschichten direkt auf dem Deckel (38,56,65,73,91) oder der Schüssel (2,12,20,46,52,60,68,80,106,127-130) aufgebracht sind, eine Abschattung der Reizung durch die Bauteile ausgelöst wird, wenn der Deckel (33,56,65,73,91) von der Schüssel (2,11,20,46,52,60,68,80,106,127-130) angehoben wird.

13. Vorrichtung nach Anspruch 1, **dadurch gekennzeichnet, dass** im Falle einer Drehschüssel (2,46,52,60,128,129) ein Schaberwerkzeug (10) unter dem Deckel befestigt ist.

14. Vorrichtung nach Anspruch 1, **gekennzeichnet durch** die Tatsache, dass der Schaber/Gegenwerkzeug mit einer Schaberklinge (10) eine besondere Form und einen entsprechenden Einsatz aufweist, um die Wand der Schüssel (11) abzuschaben, wobei der Einsatz aus Aluminium gegossen, aus Gusseisen oder rostfreiem Strahl hergestellt ist, der zum Beispiel aus lebensmittelechtem Polyurethan der Härte 90/95 Schorres oder aus anderen abriebfesten vergleichbaren Materialien wie beispielsweise Silikon bedeckt wird.

15. Verfahren zum Steuern einer Kochvorrichtung nach einer der vorhergehenden Ansprüche 1 bis 14, wobei die Kochvorrichtung aus einer zentralen Einheit zur Steuerung der Betriebsparameter der Kochvorrichtung und einer Schüssel (2,11,20,46,52,60,68,80,106,127-130), die die Zutaten enthält, besteht, wobei mindestens eine Thermosonde (4,7,14,19,30,75,78) sich im Inneren der Schüssel (2,11,20,46,52,60,68,80,106,127-130) befindet, **dadurch gekennzeichnet, dass** wenigstens ein Betriebsparameter der Kochvorrichtung abhängig von der Temperatur, gemessen durch die Thermosonde (4,7,14,19,30,75,78), gesteuert wird.

## Claims

1. Food preparation device, in particular for the preparation of a flour-based dough, including a frame (B) supporting a mixing container referred to as the bowl (2,11,20,46,52,60,68,80,106,127-130) including an aperture through which ingredients may be introduced, a first working tool (1,5,8,17,31,69,83,97), drive means for rotating said first working tool (1,5,8,17,31,69,83,97) relative to the bowl (2,11,20,46,52,60,68,80,106,127-130) and/or drive means for rotating the bowl (2,11,20,46,52,60,68,80,106,127-130), said first working tool (1,5,8,17,31,69,83,97) including an active part coming into contact ingredients to be mixed in the bowl (2,11,20,46,52,60,68,80,106,127-130), at least a temperature sensor (4,7,14,19,30,75,78) being placed inside of the bowl (2,11,20,46,52,60,68,80,106,127-130),
**characterized in that** the first working tool (1,5,8,17,31,69,83,97) is designed in the form of an arm (83) placed on the side of the drive means, which has a highly flat aerodynamic profile, this profile being extended by a branch with a more pronounced spiral shape at the beginning of the arm than in the middle part, said spiral shape being accentuated from the middle part to the free end of the arm (83), said end going up into a flattened form as a spoon OR
in the form of an arm (17,69), whereby a large part of the surface of the arm (17,69) being turned to the outside of the bowl (68,80,106) in other words placed in front of a part of the bowl wall (68,80,106) and in front of a part of the bowl bottom (68,80,106), being applied close to them, said arm (17,69) has a shape of an S and the free end of the arm (69) along of said bowl wall is slightly bent back the inside of the bowl (80) following the profile formed by the pasty ingredients in the bowl (80),
the device including also a second working tool referred to as the counter-tool (3,6,18,29,50,74,84,98,122), said counter-tool (3,6,18,29,50,74,84,98,122) having an active part engaging the ingredients to be kneaded, the active part of said counter-tool (3,6,18,29,50,74,84,98,122) being at least intermittently nearby the active part of the first working tool (1,5,8,17,31,69,83,97) so that the counter-tool (3,6,18,29,50,74,84,98,122) and the first working tool (1,5,8,17,31,69,83,97) interact the ingredients to be kneaded in the bowl (2,11,20,46,52,60,68,80,106,127-130),
that is used, in addition to the first working tool (1,5,8,17,31,69,83,97), one or more auxiliary tools (10,85,126) of the type- tools scraper (10,85,126), these tools (10,85,126) to be attached on the device by quick means as by clamping or equivalent technics, so that at least one auxiliary tool can also be used as main or auxiliary counter-tool when not used instead of the first working tool (1,5,8,17,31,69,83,97),
a tool scraper (10,85,126) being bound on the first working tool (1,5,8,17,31,69,83,97) which turn slowly at the bottom of the bowl (2,11,20,46,52,60,68,80,106,127-130) or on a planetary tray in order to make the mixing of ingredients, optionally without incorporation of air at low speed, while avoiding crusting on the bottom of the bowl (2,11,20,46,52,60,68,80,106,127-130), the tool scraper (10,85,126) having a scraper blade.

2. Device according to claim 1, **characterized in that** the counter-tool (3,6,18,29,50,74,84,98,122) has a lower part having a shape following the exact shape of the trajectory swept by the lower part of first working tool (1,5,8,17,31,69,83,97) and preferably said shape ending with a tip which can deviate the said trajectory of the first working tool (1,5,8,17,31,69,83,97).

3. Device according to the preceding claim, **characterized in that** the said counter-tool (3,6,18,29,50,74,84,98,122) is in the form of an arm (84) having a planar portion with an inner profile flat or slightly curved and a slightly embossed outer profile.

4. Device according to any one of the preceding claims 1 to 3, **characterized in that** the first working tool (83,97) is driven by an element in a rotational movement compound planetary cycloid or elliptical type, said first working tool (83,97) on the one hand itself rotates about its axis of rotation and on the other hand, along with the element itself, about the rotation axis of said element, the rotation axis of the said element not being intermingled with the rotation axis of the first working tool (83,97), the said working tool (83,97) being introduced into the bowl (2,11,20,46,52, 60,68,80,106,127-130) from its top or sideways through an opening in the wall.

5. Device according to claim 4, **characterized in that** the counter-tool (10,84,85,98,122) is also driven in a rotational movement compound planetary cycloid or elliptical type, of co-rotating or counter-rotating movements in a preferential speed ratio 1/10 compared to the replaceable working tool (83,97) driven by a variable speed.

6. Device according to claim 1, **characterized by** the fact that it includes an average of tools of a horizontal planetary having a spiral arm and a counter-arm of preference forms, wherein the inner bowl wall is fitted by the profile of the arm and the profile of the scraper in external of the arm.

7. Device according to claim 1, **characterized by** the fact that the bottom of the bowl is a crown with a semi-elliptical shape of about 55 degrees and/or for a five liter bowl of about 230 mm diameter and 180 mm deep, the ellipse axis having a large length of 120 mm, and/or said bowl being splayed in upper part for a better visualization of its inside and/or facilitate the access from the outside.

8. Device according to claim 1, **characterized in that** the second counter-tool (3,6,18,29,50,74,84,98,122) carries the temperature sensor (4,7,14,19,30,75,78) on its active part, this thermal probe (4,7,14,19,30,75,78) can be wireless and remotely powered by an induction coil while the second counter-tool (3,6,18,29,50,74,84,98,122) is driven in rotation, or with wire when the second counter-tool (3,6,18,29,50,74,84,98,122) does not rotates whereas the bowl (2,46,52,60,128,129,130) rotates.

9. Device according to claim 1, **characterized by** the fact that it is a kneading machine type oblique, spiral, or planetary.

10. Device according to any one of the preceding claims 1 to 9, **characterized in that** the side walls and the bottom of the bowl (2,46,52,60,128,129,130) are surrounded by a non-turning thermal enclosure (36,49,61) which can include some heating elements.

11. Device according to any one of the preceding claims 1 to 9, **characterized in that** the opening of the bowl (2,11,20,46,52,60,68,80,106,127-130) is located in the upper part and is coated with a lid (38,56,65,73,91) of thermal-insulating material which can be transparent and of food quality plastic or heat-resistant glass or including heating elements.

12. Device according to claims 10 or 11, **characterized in that** the heating elements are layers of silkscreened resistors directly on the lid (38,56,65,73,91) or the bowl (2,11,20,46,52,60,68,80,106,127-130), a switching off of the heating by said elements being triggered when the- lid (38,56,65,73,91) is lifted from the bowl (2,11,20,46,52,60,68,80,106,127-130).

13. Device according to claim 1, **characterized in that** in the case of a rotating bowl (2,46,52,60,128,129) the scraper tool (10) is fixed under the lid.

14. Device according to claim 1, **characterized by** the fact that the scraper/counter-tool includes a scraper blade (10) of particular sharp molded on an insert as to scrape the bowl wall (11), said insert being in aluminum cast, iron cast or stainless steel covered with a molding, for exemple, in polyuréthane 90/95 Schorres hardiness, of food quality or in other abrasion-resistant equivalent materials such as silicone.

15. Method for controlling a cooking device according to anyone of the preceding claim 1 to 14, said device having a central control unit of the operating parameters of the cooking device and a bowl (2,11,20,46,52,60,68,80,106,127-130) for containing the ingredients, at least one temperature sensor (4,7,14,19,30,75,78) being placed inside the bowl (2,11,20,46,52,60,68,80,106,127-130), **characterized in that** at least one operating parameter of the cooking device is controlled depending of the temperature measured by the temperature sensor (4,7,14,19,30,75,78).
